(19) **Europäisches Patentamt**
**European Patent Office**
**Office européen des brevets**

(11) **EP 2 733 647 B1**

(12) **EUROPEAN PATENT SPECIFICATION**

(45) Date of publication and mention
of the grant of the patent:
**02.11.2016 Bulletin 2016/44**

(21) Application number: **12811863.5**

(22) Date of filing: **13.07.2012**

(51) Int Cl.:
*G06Q 10/00* (2012.01)          *F24F 11/00* (2006.01)
*H03J 3/00* (2006.01)          *G01S 5/02* (2006.01)

(86) International application number:
**PCT/JP2012/068002**

(87) International publication number:
**WO 2013/008935 (17.01.2013 Gazette 2013/03)**

(54) **ON-DEMAND POWER CONTROL SYSTEM, ON-DEMAND POWER CONTROL SYSTEM PROGRAM, AND COMPUTER-READABLE RECORDING MEDIUM RECORDED WITH SAID PROGRAM**

SYSTEM FÜR BEDARFSGERECHTE LEISTUNGSSTEUERUNG, PROGRAMM FÜR DAS SYSTEM FÜR BEDARFSGERECHTE LEISTUNGSSTEUERUNG UND COMPUTERLESBARES AUFZEICHNUNGSMEDIUM MIT DIESEM PROGRAMM

SYSTÈME DE CONTRÔLE DE PUISSANCE SUR DEMANDE, PROGRAMME DE SYSTÈME DE CONTRÔLE DE PUISSANCE SUR DEMANDE, ET SUPPORT D'ENREGISTREMENT LISIBLE PAR ORDINATEUR ENREGISTRÉ AVEC LEDIT PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2011 JP 2011154494**

(43) Date of publication of application:
**21.05.2014 Bulletin 2014/21**

(73) Proprietor: **Nitto Denko Corporation**
**Ibaraki-shi, Osaka 567-8680 (JP)**

(72) Inventors:
• **MATSUYAMA, Takashi**
  **Kyoto-shi, Kyoto 606-8501 (JP)**
• **KATO, Takekazu**
  **Kyoto-shi, Kyoto 606-8501 (JP)**
• **YAMADA, Yusuke**
  **Kyoto-shi, Kyoto 606-8501 (JP)**

(74) Representative: **Grünecker Patent- und Rechtsanwälte**
**PartG mbB**
**Leopoldstraße 4**
**80802 München (DE)**

(56) References cited:
• **YUSUKE YAMADA ET AL: "Human Behavior Estimation from Power Consumption Patterns of appliances over Smart Tap Network", IEICE TECHNICAL REPORT, DENSHI JOUHOU TSUUSHIN GAKKAI, JP, vol. 111, no. 134, 7 July 2011 (2011-07-07), pages 25-30, XP008172279, ISSN: 0913-5685**
• **YUSUKE YAMADA: 'Human Behavior Estimation from Power Consumption Patterns of appliances over Smart Tap Network' IEICE TECHNICAL REPORT vol. 111, no. 134, 07 July 2011, pages 25 - 30, XP008172279**

Remarks:
The file contains technical information submitted after the application was filed and not included in this specification

**EP 2 733 647 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 2 733 647 B1

**Description**

Technical Field

The present invention relates to an on-demand power control system, an on-demand power control system program, and a computer-readable recording medium recording the same program and, more particularly, to an on-demand power control system, an on-demand power control system program, and a computer-readable recording medium recording the same program which are capable of analyzing a unique feature of each electrical device collected by a smart tap and a power consumption pattern, and estimating behavior of a person at home.

Background Art

An on-demand power control system is intended to implement energy management in households and offices. The system aims to make a 180-degree shift from a supplier-centric "push" power network to a user- or consumer-driven "pull" power network. The system is a system in which a home server infers "which one of the device requests is most important" from a user's usage pattern in response to requests for power from various devices at home (e.g., requests from an air conditioner and a light) and performs control so as to supply power to electrical devices beginning with an important one with high priority, i.e., performs on-demand power control. In the following, Energy on Demand control which is the on-demand power control will be referred to as "EoD control", and a system thereof will be referred to as an "EoD control system". The EoD control system is proposed by Professor Takashi Matsuyama, Kyoto University.

The greatest benefit of use of the system is that energy saving and $CO_2$ emissions reduction can be implemented from the demand side. For example, if a user sets instructions to make a 20% electric rate cut in the home server in advance, a user-centric effort to feed only power cut by 20% can be made by EoD control, and the system can implement energy saving and $CO_2$ emissions reduction.

As the EoD control system described above, there is known a home network including estimation means for estimating the function of an electrical device that is in operation and a positional relationship between a resident and the electrical device, and estimating the number of residents at home and the behavior of the resident(s) based on the operation status(es) of electrical device(s) (see Patent Literature 1). More specifically, the home network described above includes n electrical devices arranged at home, n modules for supplying power to the n electrical devices from outlets, and for detecting power use statuses of the electrical devices and the arranged positions thereof, detection means for detecting operation statuses of m electrical devices that are actually in operation, based on the power use statuses of the n electrical devices transmitted from the modules, and detecting mutual positional relationships of the m electrical devices that are in operation based on the n arranged positions transmitted from the n modules, and estimation means for determining feasibility of the operation statuses of the m electrical devices that are in operation and estimating the number of residents at home, based on the mutual positional relationships which have been detected and the operation statuses of the m electrical devices that are in operation.

Additionally, the module described above is called a "smart tap" (hereinafter, referred to as a "ST") these days, and this ST is composed of voltage and current sensors which measure power, a semiconductor relay for power control, a ZigBee module for communication, and a microcomputer with a built-in DSP which performs overall control of the components and internal processing, and may calculate in detail current and voltage waveforms by high speed data sampling at 20 kHz (see Non Patent Literature 1).

The estimation means of Patent Literature 1 requires burdensome input operations to input to the modules in advance what each electrical device is, and measures the mutual positional relationships of the electrical devices and estimates the number of residents at home and the behavior of the resident(s) by attaching IC tags to outlets provided in the wall and providing IC tag readers to the modules. Thus, since the estimation means corresponds to human behavior estimation means, it will be referred to as the human behavior estimation means in the following. Regarding this human behavior estimation means, a problem is pointed out that, in spite of requiring burdensome labor such as an input operation of electrical devices, attachment of IC tags, installation of IC tag readers, and the like, only limited information regarding the number of residents at home and the behavior of the resident(s) based on the mutual positional relationships of the electrical devices may be obtained.

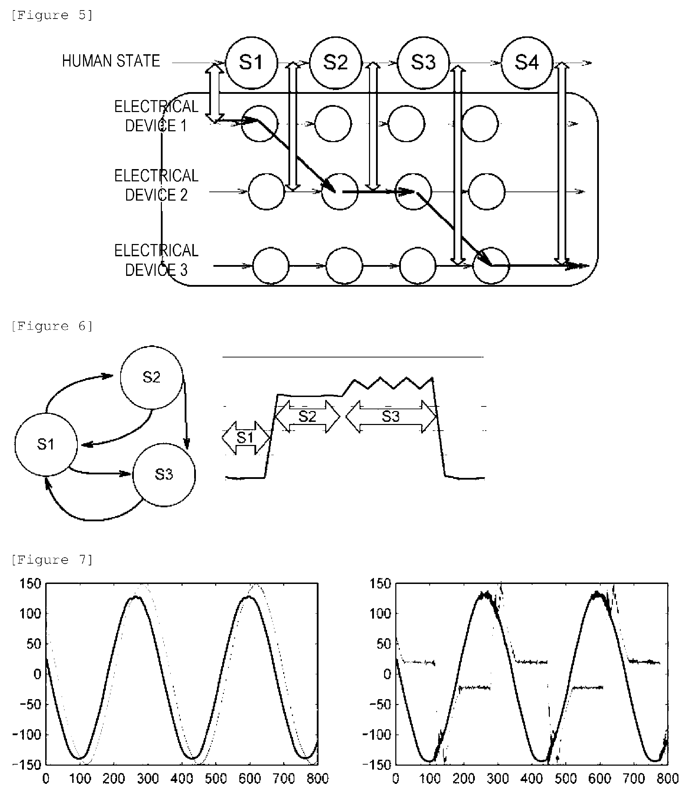

Accordingly, to solve the problem described above, a method of identifying what the electrical device being measured by the ST is is being proposed (see Non Patent Literature 2). According to this method, a small number of features representing characteristics of the current waveform is extracted and transmitted to a server by the ST, and an electrical device is identified by using the obtained features by the server. The household commercial power is AC, and as can be seem from the voltage/current waveforms of a hair dryer and a vacuum cleaner in Figure 7, the values and polarities of the current/voltage waveforms are constantly changing during use of the electrical devices, and thus, the method mentioned above allows identification of the electrical devices by comparing the phase differences of the current and voltage and the shapes of the waveforms according to the types of the electrical devices.

Citation List

Patent Literature

Patent Literature 1 International Publication No. WO 2008/152798

Non Patent Literature

Non Patent Literature 1
"i-Energy and Smart Grid," Professor Takashi Matsuyama, Graduate School, Kyoto University, p. 21, July 29, 2009
Non Patent Literature 2
"Electric Appliance Recognition from Power Sensing Data for Information-Power Integrated Network System" (Mobile P2P, ubiquitous networks, Ad hoc networks, Sensor network, General) by Takekazu Kato, Cho Hyun-Sang, Lee Dongwook, Tetsuo Toyomura, Tatsuya Yamazaki, The Institute of Electronics, Information and Communication Engineers, Technical report, USN, Ubiquitous Sensor Network, Vol. 108, N0. 399, (2009), pp. 133-138

From Yusuke Yamada et al. "Human Behavior Estimation from Power Consumption Patterns of appliances over Smart Tap Network", IEICE Technical Report, Denshi Jouhou Tsuushin Gakkai, ISSN: 0913-5685, pages 25 - 30, a method is known that detects human-induced state-transitions of appliances and estimates human position using their placement information.

Summary of Invention

Technical Problem

Regarding the human behavior estimation means of Patent Literature 1, a problem is pointed out that the information obtained is only limited information for estimating the number of residents at home and the behavior of the resident(s) based on the mutual positional relationships of the electrical devices. Now, due to the damage to the Fukushima No. 1 nuclear power plant caused by the Great East Japan Earthquake of March 2011, the Japanese government announced a policy to reduce electricity consumption by about 15% compared to the previous year, regarding a power-saving target within the jurisdictions of Tokyo Electric Power Company and Tohoku Electric Power Company during an on-peak period in summer which is a pillar of countermeasures against power shortages. Combined with this, users' desire to reduce the power consumption of electrical devices, even if only by a small amount, without impairing the Quality of Life (hereinafter, referred to as "QoL") of the users is becoming strong. To reduce power of the electrical devices without impairing the QoL, to what extent the power consumption can be reduced while maintaining the QoL becomes important, and if the behavior of a person using an electrical device at home may be estimated from the unique feature of each electrical device and the power consumption pattern, a light which one forgot to turn off may be turned off, and an electrical device which one forgot to stop may be stopped, for example. Also, if an electrical device put to use may be identified by using the feature and the power consumption pattern, and the behavior of a person at home may be estimated based on the operation state of the electrical device which has been identified (on/off or high/medium/low of a switch, or the like), power may be saved while guaranteeing the QoL.
Accordingly, in view of the conventional problem as described above, the present invention aims to provide an EoD control system (according to claim 1), an EoD control system program (according to claim 12), and a computer-readable recording medium having recorded thereon this same program which estimate the behavior of a person at home based on a feature of an electrical device and a power consumption pattern without estimating the number of persons based on the mutual positional relationships of electrical devices.

Solution to Problem

As a result of keen examination to achieve the above-described object, the present inventors have reached the present invention.
An on-demand power control system of the invention according to claim 1 of the present invention is an on-demand power control system including a power source including at least a commercial power source, a plurality of electrical devices, a smart tap connected to the electrical devices, a human behavior estimation apparatus, including a memory, for estimating behavior of a person in a living space, and a network to which the human behavior estimation apparatus is connected via the smart tap, wherein the human behavior estimation apparatus includes initial human-induced probability value estimation means for comparing a feature obtained from a power consumption pattern of an electrical device with a feature of learning data obtained in advance for each electrical device to estimate a state of the electrical device, and estimating an initial value of a human-induced probability of the electrical device based on the estimated state of the electrical device, human position estimation means for calling up the initial value of the human-induced probability of the electrical device and a likelihood map of the device from the memory, performing, for all samples, a process of referring to a sample human position selected from the likelihood map and calculating a weight of the device by multiplying a human position and the human-induced probability of the device, and estimating a probability of a human position at each time point until a final time, and human-induced probability re-estimation means for performing recalculation of the human-induced probability based on the human-induced probability and a human position probability, performing the recalculation of the human-induced probability until a value of the recalculation converges, and outputting the human-induced probability and the human position probability when the value is converged.

The human behavior estimation apparatus of the invention according to claim 2 of the present invention estimates the behavior of a person based on the human-induced probability that is a probability of a person performing a human-induced operation on a device and the human position probability that is a probability of a person existing at a position.

The human behavior estimation apparatus of the invention according to claim 3 of the present invention determines feature data of an operation state based solely on the power consumption pattern of each electrical device, and determines the human position and the human-induced probability by repeated calculation while taking a human-induced probability obtained from the data as an initial value, to estimate both the human position and the human-induced probability.

According to the human behavior estimation apparatus of the invention according to claim 4 of the present invention, the feature data of an operation state is composed of an id of an electrical device, an operation state of the device, and a feature of the device.

According to the human behavior estimation apparatus of the invention according to claim 5 of the present invention, the power consumption pattern of an electrical device is generated based on a change in an operation mode or a state of an electrical device due to operation of the device by a sequence of human states including movement and stopping.

According to the human behavior estimation apparatus of the invention according to claim 6 of the present invention, the feature of an electrical device is an average and dispersion of power consumption.

According to the human behavior estimation apparatus of the invention according to claim 7 of the present invention, the initial human-induced probability value estimation means is capable of estimating the initial value of the human-induced probability based on a probability of a state of an electrical device, by having a probability of a state shift of the electrical device being caused by a human-induced operation given in advance.

According to the human behavior estimation apparatus of the invention according to claim 8 of the present invention, the human position estimation means estimates a movement position of a person based on a human-induced probability according to which a two-dimensional position of the person at a time t may be determined by repeated calculation for a preceding time t-1.

According to the human behavior estimation apparatus of the invention according to claim 9 of the present invention, the human position estimation means uses a time-series filter to estimate the human position probability.

According to the human behavior estimation apparatus of the invention according to claim 10 of the present invention, the time-series filter is a particle filter, a Kalman filter or a moving average filter.

According to the human behavior estimation apparatus of the invention according to claim 11 of the present invention, the human position estimation means calculates the human-induced probability by using a likelihood map that is based on a relationship between a position of an electrical device and a human position.

According to the human behavior estimation apparatus of the invention according to claim 12 of the present invention, the likelihood map shows, using pixel values, an existence probability of a person who can press a power switch of an electrical device, with respect to an actual living space.

According to the human behavior estimation apparatus of the invention according to claim 13 of the present invention, in the likelihood map, calculation is performed using a pixel value of zero for a range that cannot be reached by a human hand if there is an obstacle.

According to the human behavior estimation apparatus of the invention according to claim 14 of the present invention, in the likelihood map, small pixel values are assigned to a wide range in a case where the electrical device may be operated by a remote control.

According to the human behavior estimation apparatus of the invention according to claim 15 of the present invention, in the likelihood map, in a case where the electrical device may be operated from a plurality of positions, large pixel values are assigned to a plurality of narrow ranges allowing operation.

According to the human behavior estimation apparatus of the invention according to claim 16 of the present invention, in the likelihood map, the pixel values are expressed based on a floor plan, the position/distance of an obstacle and a power switch, and a position of the electrical device.

According to the human behavior estimation apparatus of the invention according to claim 17 of the present invention, in a case where there is a plurality of persons, the human behavior estimation apparatus performs calculation using a mixed normal distribution for the number of persons.

A program of the invention according to claim 18 of the present invention is a program for causing a computer to operate as a human behavior estimation apparatus on an on-demand power control system including a power source including at least a commercial power source, a plurality of electrical devices, a smart tap connected to the electrical devices, the human behavior estimation apparatus, including a memory, for estimating behavior of a person in a living space, and a network to which the human behavior estimation apparatus is connected via the smart tap, wherein the human behavior estimation apparatus includes initial human-induced probability value estimation means, human position estimation means, and human-induced probability re-estimation means, and wherein the program causes the computer to perform processes of: by the initial human-induced probability value estimation means, comparing a feature obtained from a power consumption pattern of an electrical device with a feature of learning data obtained in advance for each electrical device to estimate a state of the electrical device, and calculating an estimation of an initial value of a human-induced probability of the electrical device based on the estimated state of the electrical device, by the human position estimation means, calling up the initial value of the human-induced probability of the electrical device and a likelihood map of the device from the memory, performing, for all samples, a process of referring to a sample human position selected from the likelihood map and calculating a weight of the device by multiplying a human position and the human-induced probability of the device, and calculating an estimation of a probability of a human position at each time point until a final time, and by the human-induced probability re-estimation means, performing recalculation of the human-induced probability based on the human-induced probability and a human position probability, performing the recalculation of the human-induced probability until a value of the recalculation converges, and outputting the human-induced probability and the human position probability when the value is converged.

A program of the invention according to claim 19 of the present invention is a program for causing a computer to operate as a human behavior estimation apparatus according to claim 1, the program causing the computer to perform a process of estimating behavior of a person based on a human-induced probability that is a probability of a person performing a human-induced operation on a device and a human position probability that is a probability of a person existing at a position.

A program of the invention according to claim 20 of the present invention is a program for causing a computer to operate as a human behavior estimation apparatus according to claim 1, the program causing the computer to perform a process of determining feature data of an operation state based solely on a power consumption pattern of each electrical device, and determining a human position and a human-induced operation by repeated calculation while taking a human-induced probability obtained from the data as an initial value, to estimate both the human position and a human-induced operation.

A recording medium of the invention according to claim 21 of the present invention is a computer-readable medium recording a program according to claim 18.

A recording medium of the invention according to claim 22 of the present invention is a computer-readable medium recording a program according to claim 19.

A recording medium of the invention according to claim 23 of the present invention is a computer-readable medium recording a program according to claim 20.

Advantageous Effects of Invention

A human behavior estimation apparatus of an on-demand power control system of the present invention is capable of estimating the behavior of a person at home through the daily life of a user in which the user uses electrical devices, and thus, power may be preferentially supplied to a necessary electrical device or unnecessary light may be turned off by laying out a plan regarding use of power or predicting an electrical device which is likely to be used next. This is an apparatus that is highly useful in saving power because power can be preferentially supplied to an electrical device needed by a user, or a light which the user forgot to turn off can be turned off and an electrical device which the user forgot to stop can be stopped, for example.

That the human behavior estimation apparatus is capable of estimating the behavior of a person at home was proven by the result of a real-life experiment conducted in a smart apartment room where subjects actually lived.

Brief Description of Drawings

[Figure 1] Figure 1 is a schematic diagram showing the configuration of a communication network of an EoD control system.

[Figure 2] Figure 2 is a schematic diagram showing the configuration of a power network of the EoD control system according to the present invention.

[Figure 3] Figure 3 is an explanatory diagram showing a relation of connection among an outlet, a ST, and an electrical device.

[Figure 4] Figure 4 is a floor plan showing the arrangement of the ST for installing each electrical device in a model house.

[Figure 5] Figure 5 is a relational view showing the state of a person and operation of a device.

[Figure 6] Figure 6 is a relational view showing a relationship between the state of a device and a power consumption pattern.

[Figure 7] Figure 7 is a waveform diagram showing voltage/current waveforms of a hair dryer and a vacuum cleaner.

[Figure 8] Figure 8 is a functional block diagram showing functions of a human behavior estimation apparatus.

[Figure 9] Figure 9 is a diagram showing a likelihood map of an IH stove.

[Figure 10] Figure 10 is a diagram showing a likelihood map of a TV.

[Figure 11] Figure 11 is a diagram showing a likelihood map of a living room light.

[Figure 12] Figure 12 is a diagram showing a likelihood map of a washroom light.

[Figure 13] Figure 13 is a diagram showing a likelihood map of a corridor light.

[Figure 14] Figure 14 is a flow chart showing an overall process of the human behavior estimation apparatus.

[Figure 15] Figure 15 is a flow chart showing a process of initial value estimation of a human-induced probability.

[Figure 16] Figure 16 is a flow chart showing a process of human position estimation (one person).

[Figure 17] Figure 17 is a flow chart showing a succeeding process of the process of human position estimation (one person).

[Figure 18] Figure 18 is a flow chart showing a re-estimation process of the human-induced probability.

[Figure 19] Figure 19 is a flow chart showing a process of human position estimation (a plurality of persons).

[Figure 20] Figure 20 is a flow chart showing a succeeding process of the process of human position estimation (a plurality of persons).

[Figure 21] Figure 21 is a flow chart showing a succeeding process of the process of human position estimation (a plurality of persons).

[Figure 22] Figure 22 is a diagram showing a probability distribution of the human position obtained by human position estimation means.

[Figure 23] Figure 23 is a probability distribution diagram showing a probability distribution of sample points obtained by the human position estimation means.

[Figure 24] Figure 24 is a dispersion diagram of positions of particles showing dispersion of a distribution and the time of occurrence of an event.

[Figure 25] Figure 25 is an activity path diagram showing the path of activities of a person obtained as a result of estimation by the human position estimation means.

[Description of Embodiments]

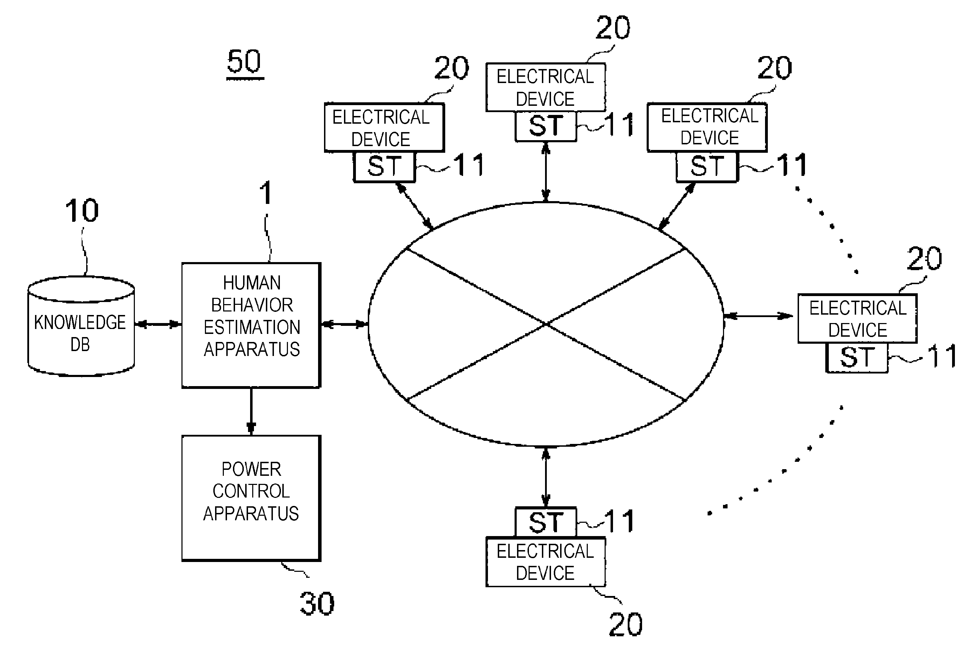

The configuration of a communication network of an EoD control system according to the present invention will be described with reference to Figure 1.

Figure 1 is a schematic diagram showing the configuration of a communication network of an EoD control system according to the present invention. An EoD control system 50 of the present invention is installed in an ordinary home, and is composed of a human behavior estimation apparatus, a ST 11, an electrical device (hereinafter, referred to simply as a "device"), and a power control apparatus 30. The human behavior estimation apparatus is connected to the STs 11 over a local area network (hereinafter referred to as a "LAN") by a wired or wireless LAN. The LAN is merely an example, and the present invention is not limited to this. According to the present invention, the priority apparatus may be connected to the STs over a network such as WiFi, PLC, ZigBee, or specific low-power radio waves. The devices are connected to the STs through power cords. Accordingly, the STs can communicate with the human behavior estimation apparatus over the LAN.

Furthermore, with respect to the human behavior estimation apparatus, a knowledge database (a knowledge DB) 10 may be structured inside the human behavior estimation apparatus by using a directly connected or built-in memory. Power from a commercial power source is supplied via the power control apparatus 30 to the human behavior estimation apparatus and each device.

Additionally, a commercial power source is described as the power source of the EoD control system of the present invention, but the present invention is not limited to this, and photovoltaic power generation or a fuel cell may be used as the power source. Although an ordinary household will be described as the installation location of the EoD control system 50 according to the present invention, the present invention is not limited to this. Any location such as an office may be adopted as long as a ST can be installed. An external type ST which is connected to a power outlet will be described as a ST of the EoD control system according to the present invention. The present invention, however, is not limited to this, and an internal type one which is embedded in a power outlet may be employed.

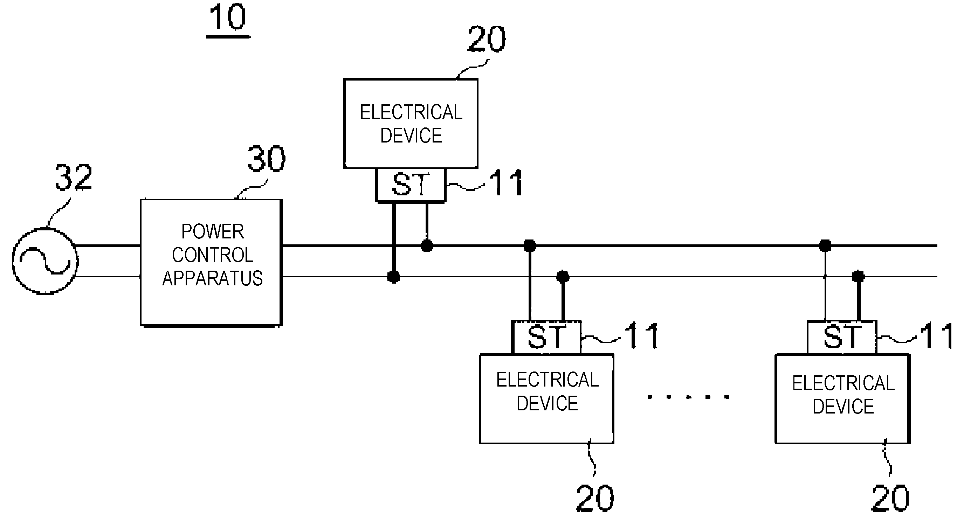

Figure 2 is a schematic diagram showing the configuration of a power system network of the EoD control system 50 shown in Figure 1.

As has been described with reference to Figure 1, the EoD control system 50 includes the power control apparatus 30. A commercial power source 32 is connected to the power control apparatus 30. The power control apparatus 30 is composed of, for example, a plurality of breakers (not shown) and includes one main breaker and a plurality of sub-breakers. Power (AC voltage) from the commercial power source 32 is given to the primary side of the main breaker, and an output from the secondary side of the main breaker is distributed among the plurality of sub-breakers. Note that the commercial power source 32 is connected to the primary side of the main breaker through a switch (not shown) for supplying/stopping supply of commercial current. The switch is turned on/off by a switching signal from the human behavior estimation apparatus.

The human behavior estimation apparatus and the plurality of devices 20 are connected to the output side of the power control apparatus 30, i.e., the secondary sides of the sub-breakers. Although not shown, the human behavior estimation apparatus is connected so as to be capable of receiving power from the power control apparatus 30 by inserting its attachment plug into, e.g., a wall socket. For the plurality of devices, the STs each include a plug which is an attachment plug and an outlet, and power from the commercial power source 32 is fed from the plug. The plurality of devices are connected so as to be capable of receiving power through plugs of the plurality of devices connected to the outlets.

As described above, in the EoD control system according to the present invention, not only the power network shown in Figure 2 but also the communication network shown in Figure 1 are constructed.

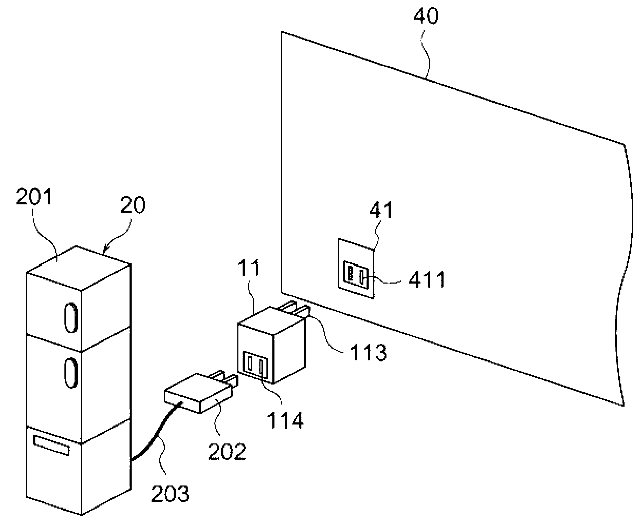

Figure 3 is an explanatory diagram explaining a relation of connection among an outlet which is connected to a commercial power source and which is arranged in a wall, a ST, and a device. Referring to Figure 3, a refrigerator 201 which is a device is composed of a plug unit 202 including an attachment plug and a cord 203, and the plug unit 202 of the refrigerator 201 is inserted into/removed from an outlet 114 of the ST. An outlet 41 is arranged in a wall 40, and commercial power is supplied to slots 411 in the outlet 41 through a power system at home. A plug 113 which is an attachment plug is inserted into/removed from the slots 411.

Regarding the structure of the ST, a known structure composed of voltage and current sensors which measure power, a semiconductor relay for power control, a ZigBee module (hereinafter, referred to as a "communication member") for communication, and a microcomputer which performs overall control of the components and internal processing is used, as described above. The ST measures in real-time the consumption of power supplied to a device via the plug 113, and transmits the power consumption to the human behavior estimation apparatus via the communication member.

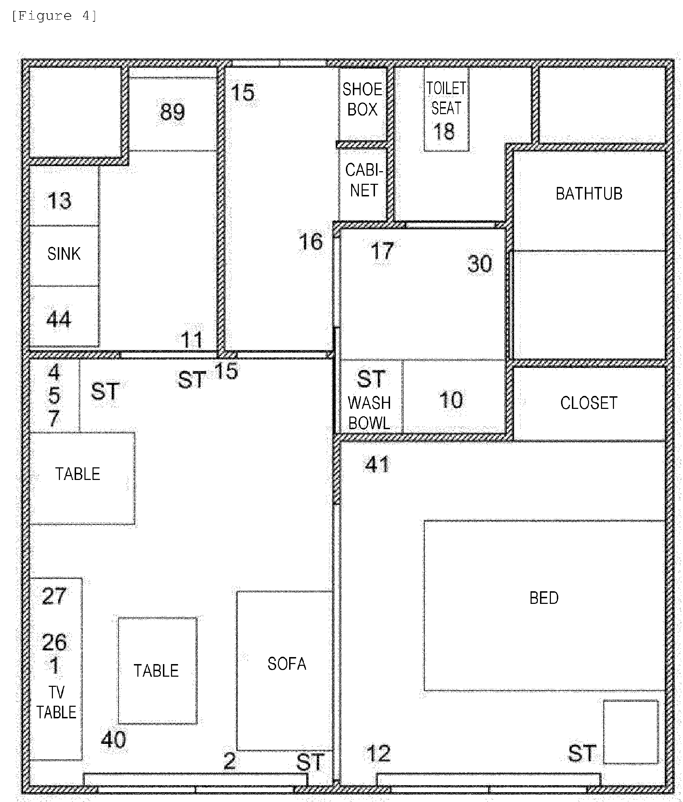

Figure 4 is a floor plan showing the arrangement of the ST for installing each electrical device in a model house.

The size shown by the floor plan is 538 cm x 605 cm, i.e. about 33 m$^2$. As shown in Figure 4, devices used in an ordinary home, such as a TV, an air conditioner, an electric pot, a coffee maker, a rice cooker, a refrigerator, a microwave oven, a washing machine, a vacuum cleaner, a hair dryer and the like, are provided. The positions of the STs are shown in Figure 4 as "ST", and the ST is provided for each device. Among the devices, devices with a remote control are the TV, the air conditioner, a living room light, two kitchen lights, a bedroom light, and a VCR. The ST to be used at the time of using a portable device is five free outlets. Portable devices are the hair dryer, the vacuum cleaner, a mobile charger, a notebook PC, an air cleaner, an electronic toothbrush, and a night stand lamp. Numbers shown in Figure 4 are the numbers in the id column of Table 1, and represent the names of the devices in the name column.

Table 1 is a table showing possible operation states (0 to 3) of each device.

[Table 1]

| id | name | State 0 | State 2 | State 2 | State 3 |
|----|------|---------|---------|---------|---------|
| 1 | TV | Off | On | | |
| 2 | Air conditioner | Off | Ventilation | In operation | |
| 4 | Pot | Off | On | | |
| 5 | Coffee maker | Off | On (Heating | | |
| 6 | Night stand lamp | Off | On | | |
| 7 | Rice cooker | Off | On | | |
| 8 | Refrigerator | OPn (Stopped) | On (Cooling) | Door is open | |

(continued)

| id | name | State 0 | State 2 | State 2 | State 3 |
|----|------|---------|---------|---------|---------|
| 9 | Microwave oven | Off | On | | |
| 10 | Washing machine | Off | On | | |
| 11 | Liging room light and kitchen light 2 | Off | Living room | Liging room + kitchen | Kitchen |
| 12 | Bedroom light | Off | On | | |
| 13 | Kitchen light 1 | Off | On | | |
| 15 | Corridor light | Off | On | | |
| 16 | Washroom light | Off | On | | |
| 17 | Toilet light and ventilation fan | Off | Light on | Ventilation fan | Light + ventilation fan |
| 18 | Toilet seat with warm-water shower feature | Off | Warl seat | Nozzle cleaning | Cleaning |
| 20 | Air cleaner | Off | On | | |
| 21 | Vaccum cleaner | Off | High | Low | |
| 22 | Hair dryer | Off | Drying mode | Set mode | Cool mode |
| 24 | Electric toothbrush | Off | On (Charging) | | |
| 30 | Bathroom light and ventilation fan | Off | Light on | Ventilation fan | Light + ventilation fan |
| 40 | Electric carpet | Off | One side | Both sides | Waiting |
| 41 | Heater | Off | Low | High | |
| 42 | Router | Off | On | | |
| 43 | VCR | Off (Waiting) | Playing | | |
| 44 | IH | Off | High | Medium | Low |
| 45 | Mobile charger | Off | Charging | | |
| 48 | Notebook PC | Off | Charging | Charging + in use | |

Now, the "behavior of a person" is generally defined as a plurality of continuous actions and a sequence of human states such as stopping and movement of the person. The present invention takes notice that, in an ordinary living space, many actions involve operation of devices, and thus, the behavior is defined taking actions as a series of human-induced operations of a device and a human state as the position where a person performs an action.

That is, the following two objects are to be achieved by the present invention.

(1) Detection of a human-induced operation of a device
(2) Estimation of the position of a person

Figure 5 is a relational view showing the state of a person and operation of a device.

Figure 6 is a relational view showing a relationship between the state of a device and a power consumption pattern.

As shown in Figure 5, a person performs operation of a device by a sequence of human states such as movement and stopping. When a device is operated, the state of the device and the operation mode are changed and are observed as a power consumption pattern of devices of a day indicating which device consumed how much power where and at what time as shown in Figure 6. This power consumption pattern of a day is defined as the "power consumption pattern" of devices and is used in the following.

Additionally, the process described below to be performed by the human behavior estimation apparatus is performed off-line, and the human behavior estimation apparatus processes the power consumption pattern transmitted by the ST and performs off-line a process of indicating the activity path of a person where a probability distribution of a human position z

$$P_h^{(i)}(\mathbf{z})$$

and a set of probabilities of a device being operated

$$\mathbf{P}_m^{(i)}$$

are output as an estimation result.

Figure 7 is a waveform diagram showing voltage/current waveforms of a hair dryer and a vacuum cleaner, and the diagram on the left is the waveforms of the hair dryer and the diagram on the right is the waveforms of the vacuum cleaner.

As shown in Figure 7, the voltage waveform (the thick line) and the current waveform (the thin line) of each device are different depending on the device, and a device may be identified by analyzing the average and dispersion of the power based on these waveforms.

Table 2 shows each device and its operation states, 0 to 3 (on/off or high/medium/low of a switch, or the like), and the values of average and dispersion of power consumption (the average and dispersion will be hereinafter referred to as "feature(s)"), and the feature is used in the process of initial value estimation of a human-induced probability described later as learning data. State 0, state 1, state 2, and state 3 in Table 1 are the same as the operation states 0 to 3 of devices in Table 2, and indicate possible operation states of devices. As can be seen from Table 2, the feature changes according to a change in the operation state, and the value of the feature is different for each device. This Table 2 showing the operation states and features of devices (id) is defined and used as the "feature data of an operation state".

[Table 2]

| id | State | Average | Dispersion |
|----|-------|---------|------------|
| 1 | 0 | 33.67584152 | 0.794761764 |
| 1 | 1 | 519.9163551 | 191.5096297 |
| 2 | 0 | 13.2 | 1.501183506 |
| 2 | 1 | 92.51079325 | 1.575825427 |
| 2 | 2 | 771.3062061 | 9834.533893 |
| 4 | 0 | 0.037665621 | 0.00393113 |
| 4 | 1 | 1178.754094 | 115228.527 |
| 5 | 0 | 0 | 0 |
| 5 | 1 | 883.2017 | 7.680225 |
| 6 | 0 | 0 | 0 |
| 6 | 1 | 40 | 0.124923425 |
| 7 | 0 | 3.008685474 | 1.257193155 |
| 7 | 1 | 511.1991327 | 16.39765424 |
| 8 | 0 | 79.61447 | 0.510276 |
| 8 | 1 | 0.689269 | 0.676579 |
| 8 | 2 | 92.71951 | 4.610942 |
| 9 | 0 | 2.871526283 | 0.036332956 |
| 9 | 1 | 1342.814552 | 144.2288547 |
| 10 | 0 | 1 | 0 |
| 10 | 2 | 66.1586741 | 21794.22809 |
| 11 | 0 | 0.313957949 | 0.000051 |
| 11 | 1 | 73.88338248 | 0.662251365 |
| 11 | 2 | 96.15896309 | 0.377936437 |
| 11 | 3 | 24.54132468 | 0.202942811 |
| 12 | 0 | 0.435026169 | 1.135486605 |
| 12 | 1 | 83.54786 | 0.917483 |
| 13 | 0 | 0 | 0 |
| 13 | 1 | 24.12100601 | 6.205286 |
| 15 | 0 | 0.339959 | 0.000303 |
| 15 | 1 | 145.0075 | 0.094239 |
| 16 | 0 | 0 | 0 |
| 16 | 1 | 13.07276 | 0.038932 |
| 17 | 0 | 0 | 0 |
| 17 | 1 | 55.1602 | 0.01782 |
| 17 | 2 | 12.08802 | 0.002011 |
| 17 | 3 | 68.01902 | 0.002623 |
| 18 | 0 | 0.455819 | 0.468028 |
| 18 | 1 | 57.75753 | 0.008368 |
| 18 | 2 | 149.9344 | 12142.89921 |
| 18 | 3 | 122.4006 | 4.101377799 |
| 20 | 0 | 0 | 0 |
| 20 | 1 | 28.72909841 | 0.040321459 |
| 21 | 0 | 0.828771283 | 0.013420972 |
| 21 | 1 | 923.7198771 | 2500.292504 |
| 21 | 2 | 270.2669604 | 102.1732589 |
| 22 | 0 | 0 | 0 |
| 22 | 1 | 1248.322651 | 144.3794678 |
| 22 | 2 | 70.22042084 | 0.097136284 |
| 22 | 3 | 59.67681294 | 0.09438221 |
| 24 | 0 | 0 | 0 |
| 24 | 1 | 0.8 | 0.49345 |
| 30 | 0 | 0 | 0 |
| 30 | 1 | 9.810464 | 0.035764 |
| 30 | 2 | 15.93536 | 0.259133 |
| 30 | 3 | 27.18636 | 0.443368 |
| 40 | 0 | 0 | 0 |
| 40 | 1 | 214.4565 | 15.95754 |
| 40 | 2 | 0.366176 | 0.002291 |
| 40 | 3 | 428.2257 | 122.0433 |
| 41 | 0 | 0.412173 | 0.373117 |
| 41 | 1 | 656.1504 | 152.1595 |
| 41 | 2 | 1218.378 | 1186.601 |
| 42 | 0 | 0 | 0 |
| 42 | 1 | 30.245633 | 1.345523 |
| 43 | 0 | 30.73303 | 0.376635 |
| 43 | 1 | 28.54118 | 0.413536 |
| 44 | 0 | 3.554298 | 0.487601 |
| 44 | 1 | 1206.067 | 883.7798 |
| 44 | 2 | 471.9262 | 7.701671 |
| 44 | 3 | 270.34565 | 5.603545 |
| 45 | 0 | 0 | 0 |
| 45 | 1 | 2.854644 | 0.504454 |
| 48 | 0 | 0 | 0 |
| 48 | 1 | 15.13420972 | 0.871526283 |
| 48 | 2 | 30.093702 | 5.339071 |

When position information of devices is given, if the timing of a human-induced operation performed by a person with respect to a device is known, it is possible to know that the person was near the device at that time, and by connecting these facts in a chronological order, the movement track of the person may be estimated. However, a device includes not only a state change due to a human-induced operation, but also an automatic state change, continuous load variations and the like, and it is difficult to identify a human-induced operation based solely on the power consumption pattern. If the position information of a person may be estimated at this time, since a human-induced operation is possible if the person is near the device and the operation is not possible if the person is far away from the device, it is possible to distinguish between a human-induced operation and a state change inducted by other factors. To distinguish between the two, it is necessary to understand a "human-induced probability

$$p_m(s_{a,t} = 1)$$

", which is the probability of a person performing a human-induced operation with respect to a device at a time t, and a "human position probability

$$p_h(z_t)$$

", which is the probability of a person being able to operate a device from a position $Z_t$. The "human-induced probability

$$p_m(s_{a,t} = 1)$$

" and the "human position probability

$$p_h(z_t)$$

" will be described below.

Whether a human-induced operation is performed on a certain device

$$a$$

at a time

$$t$$

will be expressed by

$$s_{a,t}.$$

$$s_{a,t} = \begin{cases} 1 & \text{Human-induced operation is performed} \\ 0 & \text{Human-induced operation is not performed} \end{cases}$$

$$(1)$$

Also, when the human position at a time

$$t$$

is given as

$$Z_{t,}$$

and the power consumption pattern of

$$a$$

up to the time

$$t$$

is given as

$$W_{a,t,}$$

the probability

$$p_m(s_{a,t} = 1)$$

of a person performing a human-induced operation (hereinafter, referred to as a "human-induced probability") on

$$a$$

is expressed by the following equation.

$$p_m(s_{a,t} = 1) = \int p_m(s_{a,t} = 1 \,|\, W_{a,t}, z_t) p_h(z_t) d\, z_t$$

$$= \int p_m(W_{a,t} \,|\, s_{a,t} = 1) P_m(s_{a,t} = 1 \,|\, z_t) p_h(z_t) d\, z_t \qquad (2)$$

$$p_m(W_{a,t} \,|\, s_{a,t} = 1)$$

is the probability of a power consumption pattern

$$W_{a,t}$$

being obtained when a person operates the device $\alpha$.

$$p_h(z_t)$$

is the probability distribution of the human position (hereinafter, referred to as a "human position probability"), and

$$p_m\left(s_{a,t} = 1 \mid z_t\right)$$

is the probability of a person being able to operate

$$a$$

from a certain position

$$z_t.$$

According to this equation, it can be seen that, if the human position probability

$$p_h\left(z_t\right)$$

is obtained, the human-induced probability

$$p_m\left(s_{a,t} = 1\right)$$

may be estimated.

On the other hand, when the number of devices is given as

$$N,$$

whether a human-induced operation is performed on all the devices at a time

$$t$$

is expressed by a set

$$s_t = \left\{s_{a1,t}, s_{a2,t}, \cdots, s_{aN,t}\right\},$$

and a sequence of human-induced operations up to a time

$$t$$

is given as

$$S_t = \left\{s_0, s_1, \cdots, s_t\right\},$$

the human position may be determined by the following equation by Bayes' theorem.

$$p_h(z_t) = p_h(z_t \mid S_t) = \frac{p_h(S_t \mid z_t) p_h(z_t \mid S_{t-1})}{p(S_t \mid S_{t-1})}$$

$$(3)$$

Moreover, since

$$p_h(S_t \mid S_{t-1})$$

is not related to a probability variable

$$z_t,$$

$$\frac{1}{p(S_t \mid S_{t-1})}$$

is given as a normalization constant

$$k_t,$$

and

$$k_t \, p_h(S_t \mid z_t) p_h(z_t \mid S_{t-1})$$

is given. Here,

$$p_h(S_t \mid z_t)$$

is the human-induced probability for each device based on the human position

$$z_t,$$

and may be calculated by the following equation.

$$p_h(S_t \mid z_t) = \prod_a \{ p_m(s_{a,t} = 1 \mid z_t) p_m(s_{a,t} = 1) + \alpha p_m(s_{a,t} = 0) \}$$

$$(4)$$

Here, the influence on a device on which the human-induced operation is not performed is irrelevant to the human position, and thus, a specific probability

$$\alpha$$

is given as a uniform distribution. Also,

$$p_h(z_t \mid S_{t-1})$$

in Equation (3) is a human position estimated based on the observation until a time

$$t-1,$$

and when assuming that the movement track of a person has a Markov property, modification to the following equation is possible.

$$p_h(z_t \mid S_{t-1}) = \int P_h(z_t \mid z_{t-1}) p_h(z_{t-1} \mid S_{t-1}) d\, z_{t-1}$$

$$(5)$$

Here,

$$p_h(z_t \mid z_{t-1})$$

is a movement model of a person, and

$$p_h(z_{t-1} \mid S_{t-1})$$

is a human position probability at a preceding time. Equations (3) and (5) are time series filter equations, and may be efficiently solved by a particle filter, a Kalman filter or a moving average filter, each being a time series filter, if the probability of a human-induced operation expressed by Equation (4) and the movement model are given. It can be said that, if a human-induced operation

$$p_m(S_t)$$

is obtained, for example, the human position

$$p_h(z_t)$$

may be determined by the particle filter.

Accordingly, it can be seen that, according to this problem, there is interdependence that, if the human-induced operation

$$p_m(S_t)$$

is known, the human position

$$p_h(z_t)$$

may be determined, and if the human position

$$p_h(z_t)$$

is known, the human-induced operation

$$p_m(S_t)$$

may be determined.

The human behavior estimation apparatus of the present invention may estimate both of the human position and the human-induced operation by determining the feature data of the operation state based solely on the power consumption pattern of each device, and determining the human position and the human-induced operation by repeated calculation while taking the feature of the human-induced operation determined from the data as the initial value.

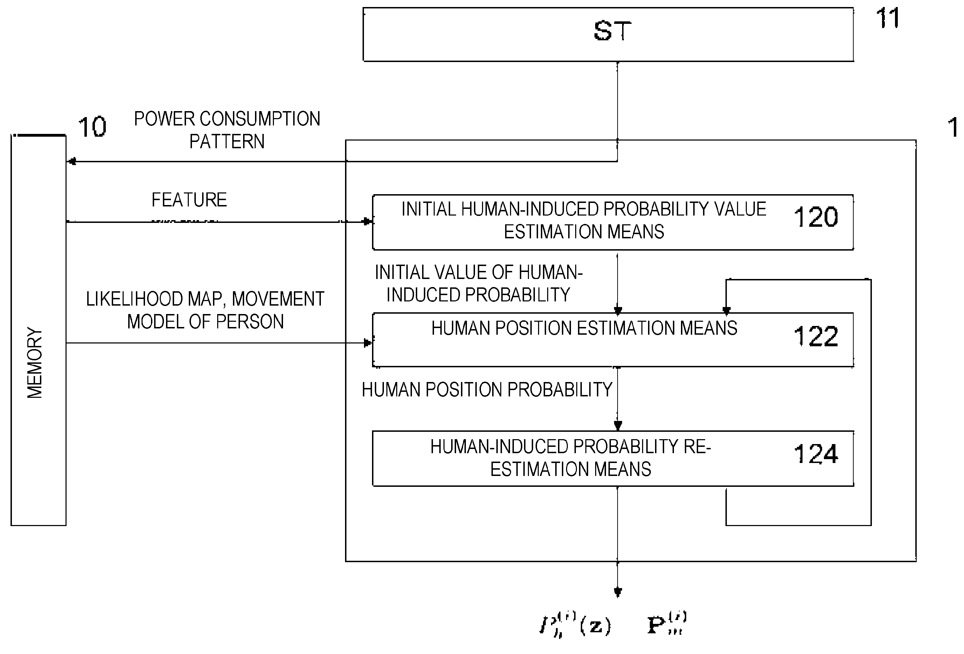

Figure 8 is a functional block diagram showing functions of the human behavior estimation apparatus shown in Figure 1.

The human behavior estimation apparatus is composed of initial human-induced probability value estimation means 120, human position estimation means 122, and human-induced probability re-estimation means 124.

This human behavior estimation apparatus 1 has (1) a function of setting, by the initial human-induced probability value estimation means 120, an initial value of a human-induced probability of a device by comparing the power consumption pattern of the device received from the ST with the feature and the operation probability of the device stored in a memory, (2) a function of estimating a human position by the human position estimation means 122 by using a time series filter and based on the initial value, and a floor plan, the arrangement of devices, the device operation probability at each position and a human movement model stored in the memory, and (3) a function of estimating, by the human-induced probability re-estimation means 124, a human-induced probability of the device being operated, based on the estimated human position, inputting the estimated human-induced probability to the human position estimation means 122, inputting the estimated human position to the human-induced probability re-estimation means 124, performing processes until the human position estimation process and the human-induced probability re-estimation process converge, and outputting the human position and the human-induced probability.

Probability calculation processes performed by (1) the initial human-induced probability value estimation means 120, (2) the human position estimation means 122, and (3) the human-induced probability re-estimation means 124 in Figure 8 will be described below.

(1) Initial Human-Induced Probability Value Estimation Means

The probability calculation process of the initial human-induced probability value estimation means 120 will be described.

In the initial estimation, the probability of a human-induced operation (the human-induced probability) is estimated based on Equation (6) by using only the power consumption pattern

$$W_{a,t}$$

of each of the devices

$$a_1, a_2, \cdots, a_N.$$

$$P_m^{(0)}(s_{a,t} = 1) = p_m(s_{a,t} = 1 \mid W_{a,t})$$

$$(6)$$

Each device has an operation mode unique to the device, and the operation mode is shifted by a human-induced operation or automatic control. That is, the human-induced operation and the automatic operation may be defined for each state transition like this. When a state

$$\delta$$

is shifted to a state

$$\delta'$$

from a time

$$t-1$$

to a time

$$t,$$

the probability of this shift being caused by a human-induced operation is given as

$$p_o(s_{a,t} = 1 \mid d_{t-1} = \delta, d_t = \delta').$$

Also, when the probability of the state of a household appliance being

$$\delta$$

at the time

$$t$$

is given as

$$p_o(d_t = \delta \mid W_{a,t}),$$

the human-induced probability for this household appliance is given as the following equation.

$$p_m(s_{a,t} = 1 \mid W_{a,t}) =$$
$$\sum_{d_{t-1}, d_t} p_o(s_{a,t} = 1 \mid d_{t-1}, d_t) p_o(d_{t-1} \mid W_{a,t-1}) p_o(d_t \mid W_{a,t})$$

$$(7)$$

If the probability

$$p_o(s_{a,t} = 1 \mid d_{t-1}, d_t)$$

of a certain state shift being caused by a human-induced operation is given in advance, the initial value of the human-induced probability may be estimated from the probability

$$p_o(d_t \mid W_{a,t})$$

regarding the state of the household appliance.

Which power consumption pattern observed by a smart tap corresponds to which household appliance is recognized in advance by the technique described in Non Patent Literature 2. At this time, estimation of the state of a device is performed by using the average and dispersion of the power consumption in a predetermined time section. A large number of average values and dispersion values of power consumption in each state are learned in advance as sample values for each state, with respect to all the devices. The average value of power consumption at the time when a household appliance

$$\alpha$$

is in a state

$$\delta$$

is given as

$$\mu_{a,\delta},$$

and the dispersion value is given as

$$\sigma_{a,\delta},$$

and these are normalized as below such that the average will be zero and dispersion will be one:

$$\hat{\mu}_{a,\delta}, \hat{\sigma}_{a,\delta}.$$

$$m$$

pieces of data are selected and given as learning data for each state, and

$$m'$$

pieces of data which are different from the above and which are randomly extracted are given as unknown data, and the state of the unknown data is estimated by the nearest neighbor algorithm, and accuracy evaluation is performed. Accordingly, when the state of the device

$$a$$

is assumed to be

$$\delta_i\,(i=1,2,\cdots,D)_,$$

the probability

$$p_o(\delta_i \mid \delta_k)(i,k=1,\cdots,D)$$

of being a true state

$$\delta_i$$

with respect to an estimated state

$$\delta_k$$

may be obtained. When the power consumption pattern

$$W_{a,t}$$

of the device

$$a$$

is measured, the normalized average value

$$\hat{\mu}_{a,t}$$

and dispersion value

$$\hat{\sigma}_{a,t}$$

of power consumption are compared with the learning data, and a state

$$\delta_{a,t}$$

is estimated. At this time, if the estimation result by the nearest neighbor algorithm is given as

$$\delta_{a,t},$$

the probability of being in the state

$$\delta_{a,t}$$

at the time

$$t$$

is

$$p_o(d_t = \delta_{a,t} \mid W_{a,t}) = p_o(\delta_{a,t} \mid \delta_{a,t}).$$

To estimate the human-induced probability by Equation (6),

$$p_o(d_t = \delta_{a,t} \mid W_{a,t})$$

has to be estimated for all the combinations of the states, but in reality, calculation is performed only for the state with the highest probability, for the sake of simplicity.

$$p_m(s_{a,t} = 1 \mid W_{a,t}) =$$
$$p_o(s_{a,t} = 1 \mid \delta_{a,t-1}^{*}, \delta_{a,t}^{*}) p_o(\delta_{a,t-1}^{*} \mid W_{a,t-1}) p_o(\delta_{a,t}^{*} \mid W_{a,t})$$
$$\text{Where,} \quad \delta_{a,t}^{*} = \arg\min_{\delta_i}\left\{(\hat{\mu}_{a,\delta_i} - \hat{\mu}_{a,t})^2 + (\hat{\sigma}_{a,\delta_i} - \hat{\sigma}_{a,t})^2\right\}$$

$$(8)$$

Also, when the human-induced probability is below a threshold

$$\mathrm{T}_o,$$

filtering is performed such that the human-induced probability is assumed to be zero, to simplify the human position estimation.

$$p_m^{(0)}(s_{a,t}=1) = \begin{cases} 0 & \text{if} \quad p_m(s_{a,t}=1|W_{a,t}) < T_o \\ p_m(s_{a,t}=1|W_{a,t}) & \text{otherwise} \end{cases}$$

$$(9)$$

Here, the combination of a household appliance and a time

$$(a,t)$$

by which

$$p_m^{(0)}(s_{a,t}=1) \geq T_o$$

is true is made an event sequence

$$E^{(0)} = \{(a,t) \mid p_m^{(0)}(s_{a,t}=1) \geq T_o\},$$

and a combination of a time and a device with respect to which a human-induced operation has possibly been performed is indicated.

(2) Human Position Estimation Means

The probability calculation process of the human position estimation means 122 will be described.
A method of estimating a human position

$$p_h^{(i)}(z_t)$$

based on a human-induced probability

$$p_m^{(i-1)}(s_{a,t}=1)$$

estimated according to Equations (3), (4) and (5) will be described. The internal state to be determined is a two-dimensional position

$$z_t = (x_t, y_t)$$

of a person at the time

$$t,$$

and a movement position of the person is estimated based on a human-induced probability

$$p_m^{(i-1)}(s_{a,t} = 1)$$

determined by repeated calculation for a preceding time (t-1).

According to Equation (3), when

$$k_t$$

is given as a normalization constant, the human position probability

$$p_h^{(i)}(z_t)$$

at the time

$$t$$

may be estimated by the following equation

$$P_h^{(i)}(z_t) = P_h^{(i)}(z_t \mid S_t) = k_t P_h^{(i)}(s_t \mid z_t) p_h^{(i)}(z_t \mid S_{t-1})$$

(10)

Also, according to Equations (4) and (5), the following is true.

$$p_h^{(i)}(s_t \mid z_t) = \prod_a \left\{ p_m(s_{a,t} = 1 \mid z_t) p_m^{(i-1)}(s_{a,t} = 1) + \alpha p_m^{(i-1)}(s_{a,t} = 0) \right\}$$

(11)

$$p_h^{(i)}(z_t \mid S_{t-1}) = \int p_h(z_t \mid z_{t-1}) p_h^{(i)}(z_{t-1} \mid S_{t-1}) d z_{t-1}$$

(12)

Here, the system model

$$p_h(z_t \mid z_{t-1})$$

is a movement model of a person, and is a two-dimensional normal distribution

$$N(0, \Sigma_2),$$

according to the human behavior estimation apparatus of the present invention. Also, an observation model is estimated based on the human-induced probability

$$p_m^{(i-1)}(s_{a,t} = 1)$$

estimated as expressed by Equation (11) and the probability

$$p_m(s_{a,t} = 1 \mid z)$$

of the household appliance

$$a$$

being able to be operated from a position

$$z.$$

With respect to

$$p_m(s_a = 1 \mid z),$$

$$p_m(s_a = 1 \mid z) = \frac{1}{\sqrt{2\pi}\sigma} \exp\left(-\frac{(z - x_a)^2}{2\sigma^2}\right)$$

is given by a normal distribution regarding distance of the household appliance

$$a$$

from a position

$$x_a.$$

However, a likelihood map is given in advance such that zero is true for a position blocked by a wall or the like.
A particle filter is used to estimate the human position probability

$$p_h^{(i)}(z_t)$$

according to Equations (10), (11) and (12). A particle filter is a method of performing estimation by approximating a probability distribution by using a large number of samples (particles) generated according to the probability distribution. A set of samples according to a prior distribution

$$p_h^{(i)}(z_t \mid S_{t-1})$$

is given as

$$Q_{t|t-1} = \left\{ q_{t|t-1}^{[1]}, \cdots, q_{t|t-1}^{[M]} \right\},$$

and a set of samples according to a posterior distribution

$$p_h^{(i)}(z_t \mid S_t)$$

is given as

$$Q_{t|t} = \left\{ q_{t|t}^{[1]}, \cdots, q_{t|t}^{[M]} \right\}.$$

[Initialization] A set of random samples

$$Q_{0|0}$$

is generated as an initial value.

$$t := 1$$

is given.
[Prediction] A prediction sample

$$q_{t|t-1}^{[j]} = q_{t-1|t-1}^{[j]} + R(N(0, \Sigma_2))$$

at a time

$$t$$

is generated according to the system model. Additionally,

$$R(N(0, \Sigma_2))$$

is a random number according to the two-dimensional normal distribution

$$N(0, \Sigma_2).$$

[Filter] A weight

$$\pi_t^{[j]}$$

is calculated for each prediction sample

$$q_{t|t-1}^{[j]}$$

according to the observation model by the following equation.

$$\pi_t^{[j]} = \frac{p_h^{(i)}(s_t \mid z_t = q_{t|t-1}^{[j]})}{\sum_{j=1}^{M} p_h^{(i)}(s_t \mid z_t = q_{t|t-1}^{[j]})}$$

$$(13)$$

Here,

$$p_h^{[i]}(s_t \mid z_t = q_{t|t-1}^{[j]})$$

is calculated according to Equation (11).

$$M$$

pieces of

$$q_{t|t-1}^{[j]}$$

are sampled with replacement from

$$Q_{t|t-1}$$

at a rate proportional to respective weights

$$\pi_t^{[j]}$$

to obtain

$$Q_{t|t}.$$

Additionally, in the case where

$$s_t = \{0,0,\cdots,0\}$$

is true, the prior distribution

$$p_h^{[i]}(z_t \mid S_{t-1})$$

predicted from the distribution at a preceding time becomes the posterior distribution

$$p_h^{[i]}(z_t \mid S_t)$$

as it is, and thus,

$$Q_{t|t} = Q_{t|t-1}$$

is given and this process may be omitted. This

$$Q_{t|t}$$

is taken as the set of samples for approximating the posterior distribution. If

$$t > t_{end},$$

the process is repeated from the prediction based on

$$t := t + 1.$$

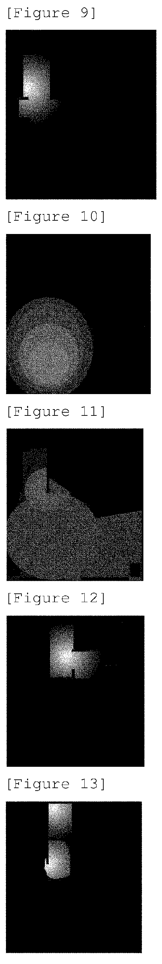

Now, specific examples of likelihood maps will be described with reference to Figures 9 to 13.

The likelihood map shows, using pixel values, an existence probability of a person who can press a power switch of an electrical device, with respect to an actual living space.

Figure 9 is a diagram showing the likelihood map of an IH stove, Figure 10 is a diagram showing the likelihood map of a TV, Figure 11 is a diagram showing the likelihood map of a living room light, Figure 12 is a diagram showing the likelihood map of a washroom light, and Figure 13 is a diagram showing the likelihood map of a corridor light. The pixel values of these likelihood maps are calculated based on the position of a switch, the floor plan, the arrangement of devices, and the length of a person's arm. It is represented that the whiter the screen (the greater the pixel value) is, the higher the probability of a person being at the position is, and the darker the screen is, the lower the probability of a person being at the position is. The likelihood maps of respective devices of Figures 9 to 13 will be described with reference to the floor plan of Figure 4 showing the arranged positions of the devices. According to the likelihood map of an IH stove (see "44" in Figure 4) of Figure 9, it can be seen that a narrow range which is the position allowing manual operation of a person is white, and that the map becomes darker as the distance from the position increases, and that the map is black at a position of the wall. According to the likelihood map of a TV (see "1" in Figure 4) of Figure 10, since operation is performed using a remote control, it can be seen that a grey circle over a wide range becomes darker as the distance from the TV increases, unlike the case of a narrow white range for the IH stove. According to the likelihood map of a living room light (see "11" in Figure 4) of Figure 11, since operation using a remote control is possible, it can be seen that the range allowing a person to perform operation is grey, but positions of the walls are black. The likelihood map of a washroom light (see "16" in Figure 4) of Figure 12 is similar to that of the IH stove of Figure 9, and it can be seen that a narrow range which is the position allowing a manual operation of a person is white, and that the map becomes darker as the distance from the position increases, and that the map is black at the position of the wall. According to the likelihood map of a corridor light of Figure 13, since double pole switches are installed at two positions, i.e. near the front door (see "15" in Figure 4) and near the living room door (see "15" in Figure 4), it can be seen that two positions near the front door and near the living room door are white, and that positions where there are obstacles such as walls and shelves are deep black. As can be seen in the example of switch at the living room door, pixel values are calculated taking a range that can be reached if the distance is 65 cm or shorter, assuming a person's arm as 65 cm for example, as a range that a person's hand can reach in spite of an obstacle.

As can be understood from the description above, the pixel values of the likelihood map are calculated based on the use statuses of devices in an actual living space in such a way that the map is black in the case there is a fixed obstacle such as a wall or a shelf, the map is grey over a wide range in the case of a remote control, and the map is white at two positions in the case of double pole switches.

(3) Human-Induced Probability Re-Estimation Means

The probability calculation process of the human-induced probability re-estimation means 124 will be described.

A method of re-estimating a human-induced probability using a human position probability at each time point according to Equation (2) will be described. According to Equation (2), estimation by integration has to be performed for all the possible human positions, but here, to simplify the process, re-estimation is performed while excluding the calculation for a position with a low probability by determining an optimal human position with the highest probability,

$$\hat{Z}^{(i)} = \left\{\hat{z}_t^{(i)}\right\}(t = 0, 1, \cdots, t_{end}).$$

As a method of determining

$$\hat{Z}^{(i)},$$

a method of determining the same as an expected value at each time point by using a weighted average by likelihood is used in many cases with respect to real-time tracking and the like, but here, what is to be determined is the movement track of a person, and thus, a path of human positions whose product of probabilities along the path is the greatest is estimated as the optimal path, taking the temporal connection into account. This may be formulated as below by giving the number of samples in the particle filter as

$$M.$$

$$\max_{j0, j1, \cdots, jt_{end}} p(q_{1|0}^{[j0]}, q_{2|1}^{[j1]}, \cdots, q_{t_{end}|t_{end}-1}^{[jt_{end}]})$$

$$(14)$$

That is,

$$\dot{j}_0, \dot{j}_1, \cdots, \dot{j}_{t_{end}}$$

satisfying the above is to be determined. An estimated value

$$\hat{Z}^{(i)}$$

of a state to be determined by a sample sequence of these numbers is determined. Specifically, each sample keeps a history regarding from which of the samples at a preceding time point the sample is derived, and

$$\hat{Z}^{(i)}$$

is determined by following the history of the sample with the greatest weight at

$$t_{end}.$$

The human-induced probability is updated by the following equation using this optimal path.

$$p_m^{(i)}(s_{a,t} = 1) = p_m(W_{a,t} \mid s_{a,t} = 1)\, p_m(s_a = 1 \mid z_t = \hat{z}_t^{(i)})$$

$$(15)$$

Update is performed by performing filtering in the same manner as Equation (9) with respect to a household appliance and a time whose human-induced probability is at or below a threshold

$$T_o,$$

and by removing a combination at or below the threshold

$$T_o$$

from the event sequence

$$E^{(i)}.$$

$$E^{(i)} = \left\{ (a,t) \in E^{(i-1)} \mid p_m^{(i)}(s_{a,t} = 1) \geq T_o \right\}$$

$$(16)$$

The human-induced probability

$$p_m^{(i)}(S_t)$$

is estimated here, and human position estimation and human-induced probability re-estimation are repeated until

$$p_m^{(i)}(S_t)$$

is converged based on

$$i := i + 1.$$

When the number of repetitions by which convergence is achieved is given as

$$i = i_f,$$

the event sequence

$$E^{(i_f)}$$

which is obtained at this time may be said to be the sequence of human-induced operations obtained from

$$S_i.$$

Also, the optimal path

$$\hat{Z}^{(i_f)}$$

determined from the final probability distribution

$$P_h^{(i_f)}(z)$$

is the movement track of a person.

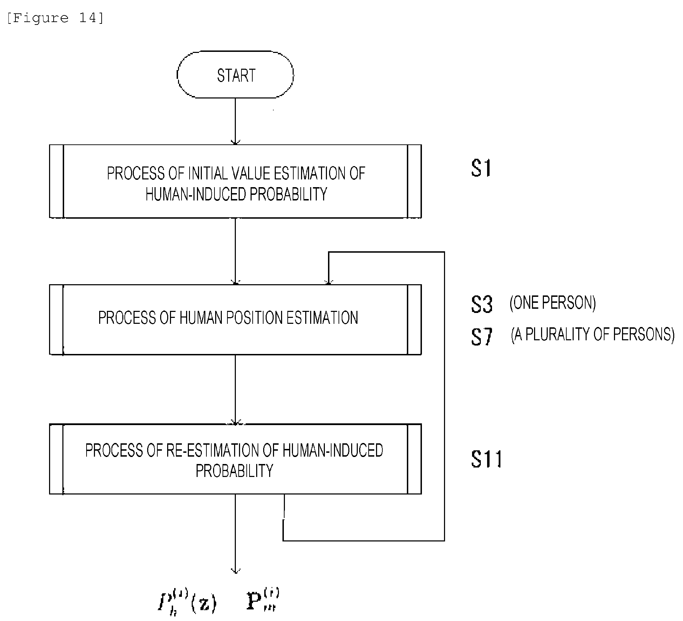

Figure 14 is a flow chart showing an overall process of the human behavior estimation apparatus of the present invention. The process of initial value estimation of a human-induced probability is performed in step S1, the process of estimation of a human position is performed in step S3 (one person) or step S7 (a plurality of persons), and the process of re-estimation of a human-induced probability is performed in step S11.

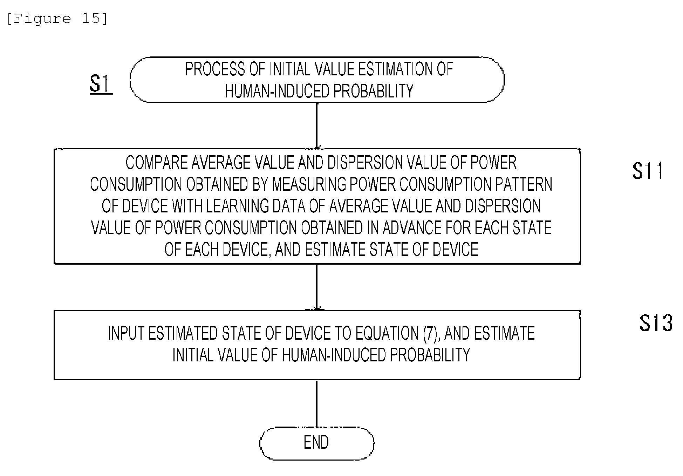

Figure 15 is a flow chart showing a process of the initial value estimation of a human-induced probability in step S1 mentioned above.

As shown in Figure 15, in step S11, the average value and the dispersion value of power consumption obtained by measuring the power consumption pattern of a device is compared with the learning data of the average value and the dispersion value of power consumption obtained in advance for each state of each device, and the state of the device is estimated. In step S13, the state of the device which is estimated is input to Equation (7) to estimate the initial value of the human-induced probability, and the initial value is stored in the memory as the human-induced probability.

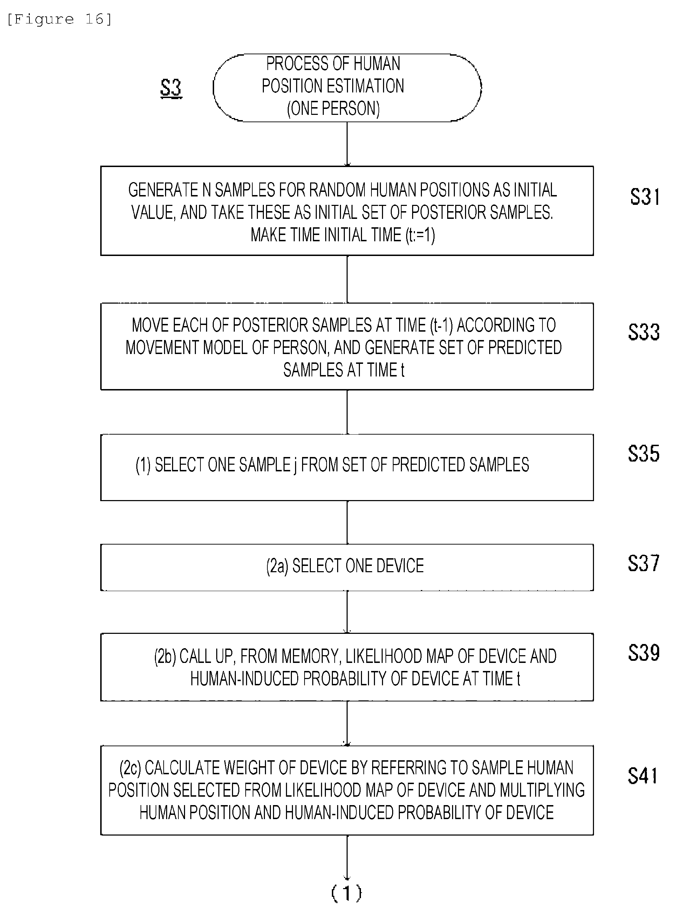

Figure 16 is a flow chart showing a process of estimation of a human position (one person) of step S3 mentioned above.

As shown in Figure 16, in step S31, N samples are generated for random human positions and are made the initial value, and these are made the initial set of posterior samples (the time is an initial time (t:=1)). In step S33, each of the posterior samples at a time (t-1) is moved according to the movement model of a person, and a set of predicted samples at a time t is generated. In step S35, (1) one sample j is selected from the set of predicted samples. In step S37, (2a) one device is selected, in step S39, (2b) the likelihood map of the device and the human-induced probability of the device at a time t are called up from the memory, and in step S41, (2c) the weight of the device is calculated by referring to a sample human position selected from the likelihood map of the device and multiplying the human position and the human-induced probability of the device, and then, the process proceeds to (1).

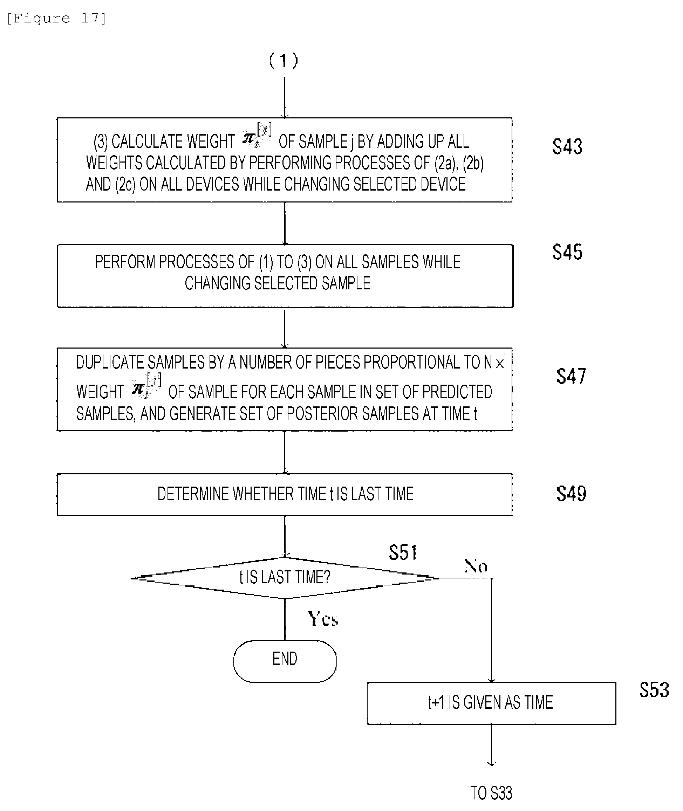

As shown in Figure 17, in step S43, (3) weights calculated by performing the processes of (2a), (2b) and (2c) described above on all the devices while changing the selected device are added up to thereby calculate the weight

$$\pi_t^{[j]}$$

of the selected sample j. In step S45, the processes of (1) to (3) described above are performed on all the samples while changing the selected sample. In step S47, samples are duplicated by a number of pieces proportional to N x the weight of sample

$$\pi_t^{[j]}$$

for each sample in the set of predicted samples, and a set of posterior samples at the time t is generated. In step S49, whether the time t is the last time is determined, and if it is determined to be Yes in step S51, the process is ended. If it is determined to be No in step S51, t+1 is given as the time in step S53, and the process returns to step S33.

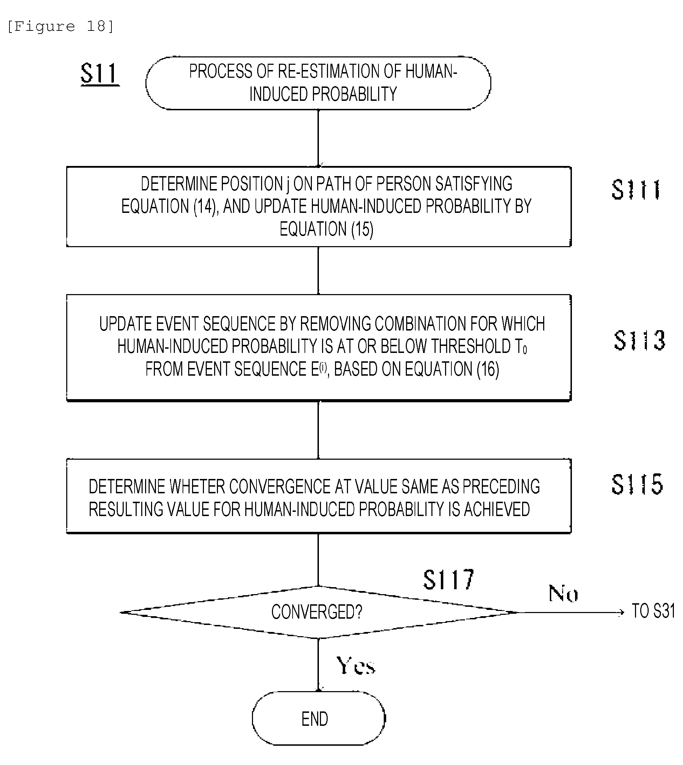

Figure 18 is a flow chart showing a process of re-estimation of the human-induced probability of step S11 described above.

As shown in Figure 18, in step S111, a position j on the path of a person satisfying Equation (14) is determined, and the human-induced probability is updated by Equation (15). In step S113, the event sequence is updated by removing a combination for which the human-induced probability is at or below a threshold $T_0$ from an event sequence $E^{(i)}$, based on Equation (16). In step S115, if convergence at the value the same as the preceding resulting value for the human-induced probability is achieved is determined, and if Yes, the process is ended, and if No, the process returns to step S31.

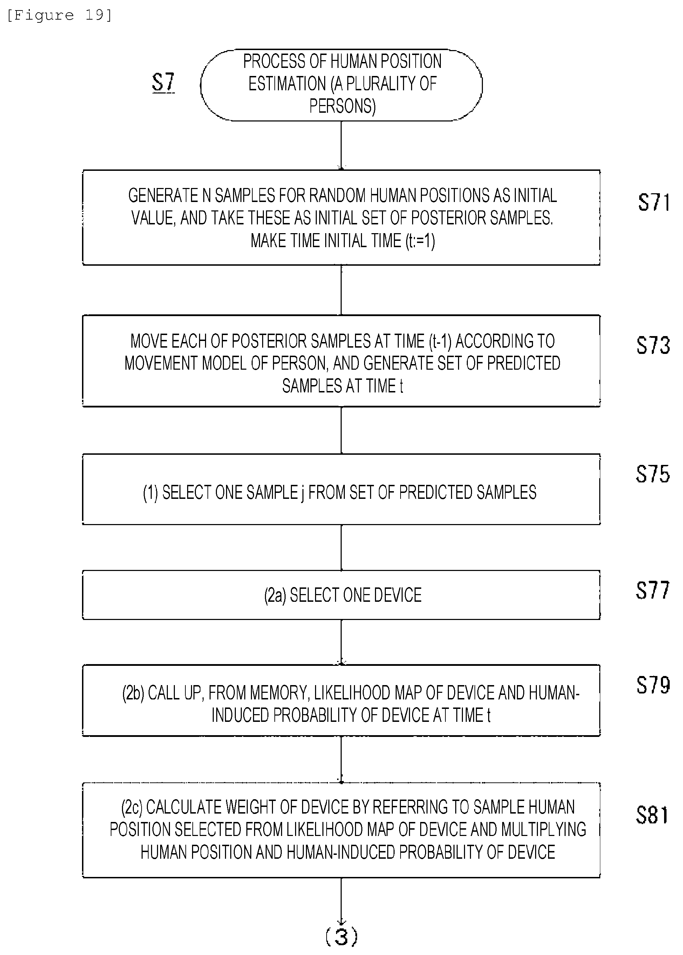

Figure 19 is a flow chart showing a process of estimation of a human position (a plurality of persons) of step S7 described above.

As shown in Figure 19, in step S71, N samples are generated for random human positions and are made the initial value, and these are made the initial set of posterior samples, and the time is made the initial time (t:=1). In step S73, each of the posterior samples at a time (t-1) is moved according to the movement model of a person, and a set of predicted samples at a time t is generated. In step S75, (1) one sample j is selected from the set of predicted samples, and in step S77, (2a) one device is selected, and in step S79, (2b) the likelihood map of the device and the human-induced probability of the device at a time t are called up from the memory. In step S81, (2c) the weight of the device is calculated by referring to a sample human position selected from the likelihood map of the device and multiplying the human position and the human-induced probability of the device, and then, the process proceeds to (3).

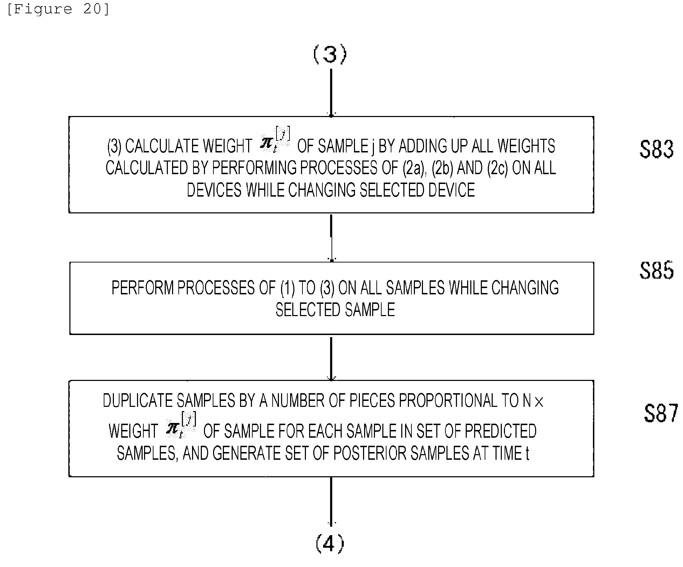

As shown in Figure 20, in step S83, (3) weights calculated by performing the processes of (2a), (2b) and (2c) described above on all the devices while changing the selected device are added up to thereby calculate the weight

$$\pi_t^{[j]}$$

of the selected sample j. In step S85, the processes of (1) to (3) described above are performed on all the samples while changing the selected sample. In step S87, samples are duplicated by a number of pieces proportional to N X the weight of sample

$$\pi_t^{[j]}$$

for each sample in the set of predicted samples, and a set of posterior samples at the time t is generated, and the process proceeds to (4).

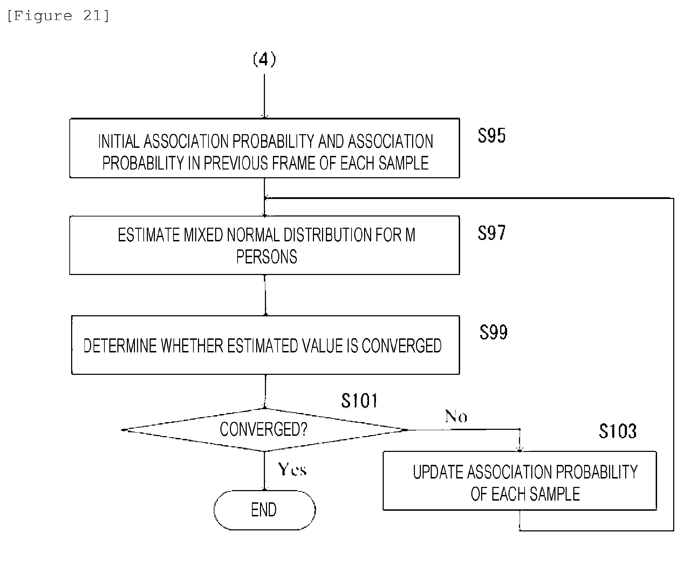

As shown in Figure 21, in step S95, an initial association probability and an association probability in a previous frame are determined for each sample, and in step S97, a mixed normal distribution for M persons is estimated, and in step S99, whether the estimated value is converged is determined, and in step S101, if Yes, the process is ended, and if No, the association probability of each sample is updated, and the process returns to step S97 and the same process is repeated until the estimated value is converged.

(Real Life Experiment)

The following real life experiment was conducted to prove that the human behavior estimation apparatus 1 is capable of estimating the behavior of a person at home based on the power consumption pattern in a smart apartment room.

The number of residents was one at a time and three in total, and 26 STs were installed. Devices were fixed to 21 of the STs, and the plugs of the devices were not inserted into or removed from the STs. The devices were arranged at positions shown in Figure 4.

With respect to the life pattern, residents were out during the day, and were at home from night to morning. No other restrictions were imposed. The experiment was conducted on three subjects, three days for each subject. The three persons were asked to record their actions in the room and which devices they used. Three days were consecutive or non-consecutive. The three subjects are subjects A, B, and C. Basic information for each subject is as follows.

- Subject A: Male in twenties, student, 2 days + 1 day
- Subject B: Female in twenties, student, 1 day x 3
- Subject C: Male in twenties, student, 3 days

The approximate power consumption of each hour was obtained for each subject based on the power consumption pattern of each subject. According to the power consumption patterns (not shown), the patterns of life that subject A returned home at about 10 o'clock at night, went to bed at about 3 o'clock in the morning, and went out at about 12 o'clock at noon, and that subject B usually slept about 7 hours a day, and that subject C used power more and over a longer period of time at night than in the morning can be grasped.

(Human Position Estimation Result)

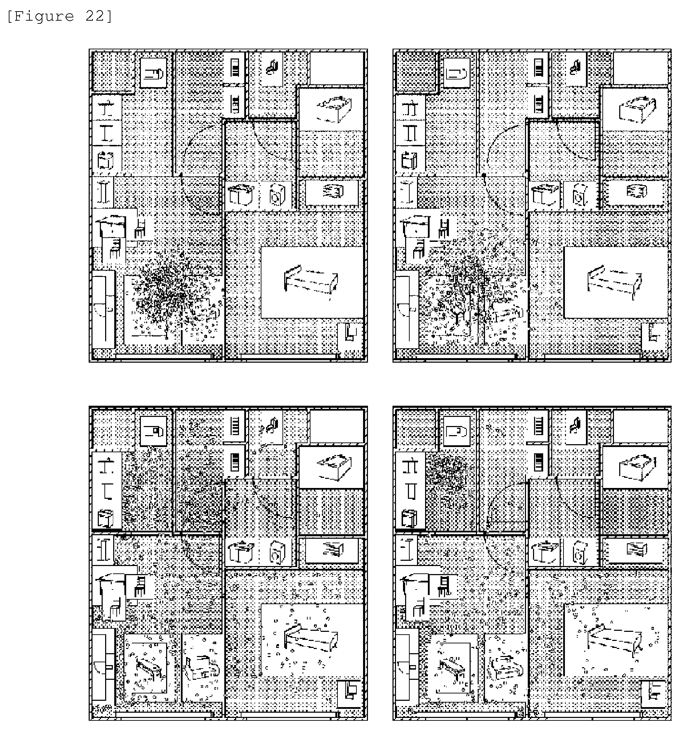

Figure 22 is a diagram showing a probability distribution of the human position obtained by human position estimation means. In Figure 22, the top left is (a), the top right is (b), the bottom left is (c), and the bottom right is (d). The time of occurrence of an event of an electrical device is shown in (a) of Figure 22. An electrical device was highly possibly operated, and the distribution is dense in the periphery. A state at a slightly later time is shown in (b) of Figure 22. It can be seen that the distribution is slightly spread in all the directions based on the movement model of a person. The distribution after a sufficient time has elapsed thereafter with no event is shown in (c) of Figure 22. Also, (d) of Figure 22 shows a state where, although an event has occurred with respect to an electrical device, since the distribution density around the electrical device 8 is low, the distribution is spread not only around the electrical device but also over the entire area. This is a part of the analysis result of day 1 of subject B.

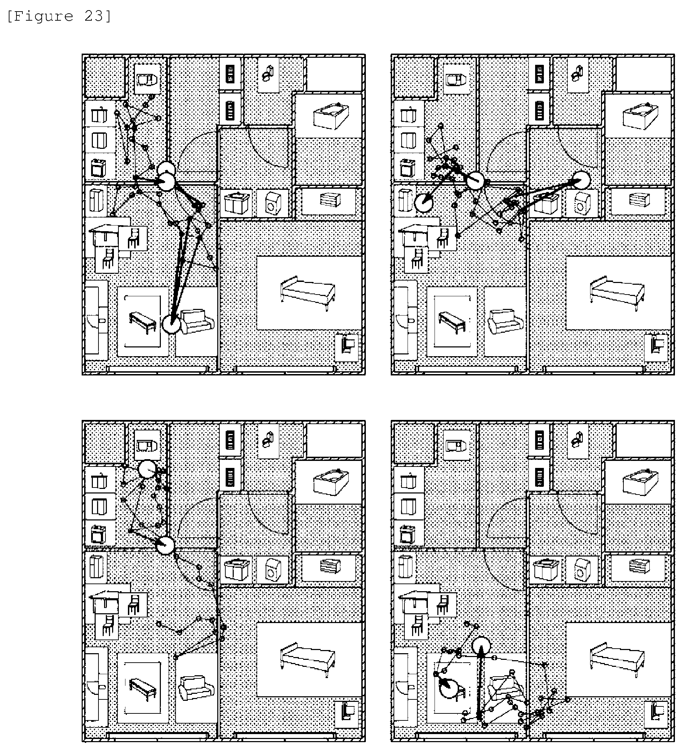

Next, the estimation result of subject C, from returning home at night on day 3 to leaving home in the morning, is shown in Figure 23 as the result of human position estimation. An optimal path determined from a probability distribution

$$P_h^{(1)}$$

obtained by performing position estimation once is drawn in order. A small black circle is the estimation position of the person for each 20 frames. A big black circle drawn as well indicates the electrical device with respect to which an event included in the event sequence $E^{(0)}$ used for the estimation has occurred, and its position. The position connected to the big black circle by a thick solid line is the estimation position at the time of the event.

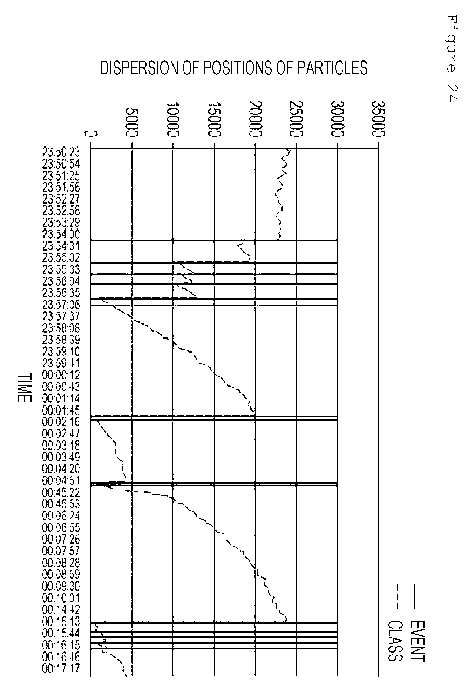

To observe the distribution as a whole, a graph with time as the horizontal axis and dispersion of distribution as the vertical axis is shown in Figure 24. Figure 24 is a dispersion diagram of positions of particles showing dispersion of a distribution and the time of occurrence of an event. The greater of the dispersion in the x direction and the dispersion in the y direction is made the dispersion of the distribution for the sake of simplicity. This is a part of the analysis result of day 1 of subject B.

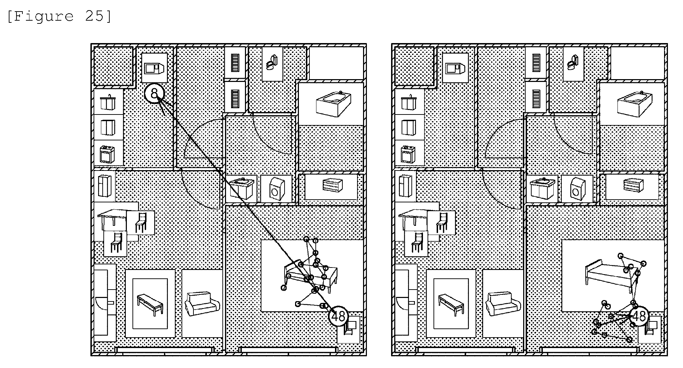

Figure 25 is an activity path diagram showing the path of activities obtained by repeated calculation by human position estimation means 122. A path according to the initial set of events $E^{(0)}$ and

$$P_h^{(1)}$$

is shown in (a) of Figure 25, and an activity path of a person according to E$^{(1)}$ and

$$P_h^{(2)}$$

at the same time is shown in (b) of Figure 25.

This (b) of Figure 25 shows the activity path of a person for which the probability distribution of a human position z $P_h^{(i)}(\mathbf{z})$ and a set of probabilities of devices being in operation $\mathbf{P}_m^{(i)}$ have been output by the human behavior estimation apparatus as estimation results, and it is proven that the human behavior estimation apparatus is capable of estimating the behavior of a person at home.

**Claims**

1. An on-demand power control system (50) comprising a power source including at least a commercial power source (32), a plurality of electrical devices (20), a smart tap (11) connected to the electrical devices (20), a human behavior estimation apparatus (1), including a memory, for estimating behavior of a person in a living space, and a network to which the human behavior estimation apparatus (1) is connected via the smart tap,
   wherein the human behavior estimation apparatus (1) includes initial human-induced probability value estimation means (120) for comparing a feature obtained from a power consumption pattern of an electrical device (20) with a feature of learning data obtained in advance for each electrical device (20) to estimate a state of the electrical device, and estimating an initial value of a human-induced probability of the electrical device (20) based on the estimated state of the electrical device (20),
   human position estimation means (122) for calling up the initial value of the human-induced probability of the electrical device (20) and a likelihood map of the device (20) from the memory, performing a process, for all samples, of referring to a sample human position selected from the likelihood map and calculating a weight for the device (20) by multiplying the human position and the human-induced probability of the device (20), and estimating a probability of a human position at each time point until a final time, and
   human-induced probability re-estimation means (124) for performing recalculation of the human-induced probability based on the human-induced probability and a human position probability, performing the recalculation of the human-induced probability until a value of the recalculation converges, and outputting the human-induced probability and the human position probability when the value is converged;
   wherein the human position estimation means (122) estimates a movement position of a person based on a human-induced probability according to which a two-dimensional position of the person at a time t may be determined by repeated calculation for a preceding time t-1;
   wherein the human position estimation means (122) calculates the human-induced probability by using a likelihood map that is based on a relationship between a position of an electrical device and a human position;
   wherein the likelihood map shows, by using a pixel value, an existence probability of a person who is capable of pressing a power switch of an electrical device, based on a use status of the electrical device in an actual living space;
   wherein, in the likelihood map, calculation is performed using a pixel value of zero for a range that cannot be reached by a human hand if there is an obstacle;
   wherein, in the likelihood map, the pixel values are expressed based on a floor plan, the obstacle, position/distance of a power switch, and a position of the electrical device; and
   **characterised in that**, in a case where there are a plurality of persons, the human behavior estimation apparatus (1) performs calculation using a mixed normal distribution for the number of persons.

2. The on-demand power control system according to claim 1, wherein the human behavior estimation apparatus estimates the behavior of a person based on the human-induced probability that is a probability of a person performing a human-induced operation on a device and the human position probability that is a probability of a person existing at a position.

3. The on-demand power control system according to claim 2, wherein the human behavior estimation apparatus determines feature data of an operation state based solely on the power consumption pattern of each electrical device, and determines the human position and the human-induced probability by repeated calculation while taking a human-induced probability obtained from the data as an initial value, to estimate both the human position and the human-induced probability.

4. The on-demand power control system according to claim 3, wherein the feature data of an operation state is composed of an id of an electrical device, an operation state of the device, and a feature of the device.

5. The on-demand power control system according to claim 4, wherein the power consumption pattern of an electrical device is generated based on a change in an operation mode or a state of an electrical device due to operation of the device by a sequence of human states including movement and stopping.

6. The on-demand power control system according to claim 4, wherein the feature of an electrical device is an average and dispersion of power consumption.

7. The on-demand power control system according to claim 1, wherein the initial human-induced probability value estimation means is capable of estimating the initial value of the human-induced probability based on a probability of a state of an electrical device, by having a probability of a state shift of the electrical device being caused by a human-induced operation given in advance.

8. The on-demand power control system according to claim 1, wherein the human position estimation means uses a time-series filter to estimate the human position probability.

9. The on-demand power control system according to claim 8, wherein the time-series filter is a particle filter, a Kalman filter or a moving average filter.

10. The on-demand power control system according to claim 1, wherein, in the likelihood map, small pixel values are assigned to a wide range in a case where the electrical device may be operated by a remote control.

11. The on-demand power control system according to claim 1, wherein, in the likelihood map, in a case where the electrical device may be operated from a plurality of positions, large pixel values are assigned to a plurality of narrow ranges allowing operation.

12. A program, which when run on a computer, causes the computer to operate as a human behavior estimation apparatus (1) on an on-demand power control system (50) including a power source including at least a commercial power source (32), a plurality of electrical devices (20), a smart tap (11) connected to the electrical devices (20), the human behavior estimation apparatus (1), including a memory, for estimating behavior of a person in a living space, and a network to which the human behavior estimation apparatus (1) is connected via the smart tap, wherein the human behavior estimation apparatus includes initial human-induced probability value estimation means (120), human position estimation means (122), and human-induced probability re-estimation means (124), and wherein the program, when run on a computer, causes the computer to perform processes of:

by the initial human-induced probability value estimation means (120), comparing a feature obtained from a power consumption pattern of an electrical device (20) with a feature of learning data obtained in advance for each electrical device (20) to estimate a state of the electrical device (20), and calculating an estimation of an initial value of a human-induced probability of the electrical device (20) based on the estimated state of the electrical device,

by the human position estimation means (122), calling up the initial value of the human-induced probability of the electrical device (20) and a likelihood map of the device (20) from the memory, performing, for all samples, a process of referring to a sample human position selected from the likelihood map and calculating a weight for the device (20) by multiplying a human position and the human-induced probability of the device, and calculating an estimation of a probability of a human position at each time point until a final time,

by the human-induced probability re-estimation means (124), performing recalculation of the human-induced probability based on the human-induced probability and a human position probability, performing the recalculation of the human-induced probability until a value of the recalculation converges, and outputting the human-induced probability and the human position probability when the value is converged;

by the human position estimation means (122), estimating a movement position of a person based on a human-induced probability according to which a two-dimensional position of the person at a time t may be determined by repeated calculation for a preceding time t-1;

by the human position estimation means (122), calculating the human-induced probability by using a likelihood map that is based on a relationship between a position of an electrical device and a human position;

wherein the likelihood map shows, by using a pixel value, an existence probability of a person who is capable of pressing a power switch of an electrical device, based on a use status of the electrical device in an actual living space;

wherein, in the likelihood map, calculation is performed using a pixel value of zero for a range that cannot be reached by a human hand if there is an obstacle;

wherein, in the likelihood map, the pixel values are expressed based on a floor plan, the obstacle, position/distance of a power switch, and a position of the electrical device; and

**characterised in that**, in a case where there are a plurality of persons, the human behavior estimation, apparatus (1) performs calculation using a mixed normal distribution for the number of persons.

13. A program, which when run on a computer, causes the computer to operate as a human behavior estimation apparatus according to claim 1, the program causing the computer to perform a process of:

estimating behavior of a person based on a human-induced probability that is a probability of a person performing a human-induced operation on a device and a human position probability that is a probability of a person existing at a position.

14. A program, which when run on a computer, causes the computer to operate as a human behavior estimation apparatus according to claim 1, the program causing the computer to perform a process of:

determining feature data of an operation state based solely on a power consumption pattern of each electrical device, and determining a human position and a human-induced probability by repeated calculation while taking a human-induced probability obtained from the data as an initial value, to estimate both the human position and a human-induced operation.

15. A computer-readable recording medium having recorded thereon a program according to claim 12.

16. A computer-readable recording medium having recorded thereon a program according to claim 13.

17. A computer-readable recording medium having recorded thereon a program according to claim 14.

**Patentansprüche**

1. System für bedarfsgerechte Leistungssteuerung (50) mit einer Leistungsquelle, die mindestens eine kommerzielle Leistungsquelle (32) enthält, mehreren elektrischen Geräten (20), einem intelligenten Abgriff (11), der mit den elektrischen Geräten (20) verbunden ist, einer Vorrichtung zur Abschätzung menschlichen Verhaltens (1) mit einem Speicher zur Abschätzung des Verhaltens einer Person in einem Wohnraum, und einem Netzwerk, mit dem die Vorrichtung zur Abschätzung menschlichen Verhaltens (1) über den intelligenten Abgriff verbunden ist,

wobei die Vorrichtung zur Abschätzung menschlichen Verhaltens (1) aufweist

eine Einrichtung zur Abschätzung eines Anfangswertes einer personeninduzierten Wahrscheinlichkeit (120) zum Vergleichen einer Eigenschaft, die aus einem Leistungsverbrauchsmuster eines elektrischen Gerätes (20) gewonnen wird, mit einer Eigenschaft von Lerndaten, die im Voraus für jedes elektrische Gerät (20) gewonnen werden, um einen Zustand des elektrischen Geräts abzuschätzen, und zur Abschätzung eines Anfangswertes einer personeninduzierten Wahrscheinlichkeit des elektrischen Geräts (20) auf der Grundlage des abgeschätzten Zustands des elektrischen Geräts (20),

eine Einrichtung zur Positionsabschätzung für eine Person (122) zum Aufrufen des Anfangswertes der personeninduzierten Wahrscheinlichkeit des elektrischen Geräts (20) und einer Wahrscheinlichkeitskarte des Geräts (20) aus dem Speicher, zur Ausführung eines Prozesses für alle Beispiele zur Zuordnung einer Beispielspersonenposition, die aus der Wahrscheinlichkeitskarte ausgewählt ist, und zur Berechnung einer Gewichtung für das Gerät (20) durch Multiplikation der Personenposition und der personeninduzierten Wahrscheinlichkeit des Geräts (20), und zur Abschätzung einer Wahrscheinlichkeit einer Personenposition für jeden Zeitpunkt bis zu einem letzten Zeitpunkt, und

eine Einrichtung zur Neuabschätzung einer personeninduzierten Wahrscheinlichkeit (124) zur Ausführung einer Neuberechnung der personeninduzierten Wahrscheinlichkeit auf der Grundlage der personeninduzierten Wahrscheinlichkeit und einer Personenpositionswahrscheinlichkeit, zur Ausführung der Neuberechnung der personeninduzierten Wahrscheinlichkeit, bis ein Wert der erneuten Berechnung konvergiert, und zur Ausgabe der personeninduzierten Wahrscheinlichkeit und der Personenpositionswahrscheinlichkeit, wenn der Wert konvergiert;

wobei die Einrichtung zur Positionsabschätzung einer Person (122) eine Bewegungsposition einer Person auf der Grundlage einer personeninduzierten Wahrscheinlichkeit abschätzt, gemäß der eine zweidimensionale Position der Person zu einem Zeitpunkt t durch wiederholte Berechnung für einen vorhergehenden Zeitpunkt t -1 bestimmbar ist; wobei die Einrichtung zur Positionsabschätzung für eine Person (122) die personeninduzierte Wahrscheinlichkeit unter Anwendung einer Wahrscheinlichkeitskarte berechnet, die auf einer Abhängigkeit zwischen einer Position eines elektrischen Geräts und einer Position der Person beruht; wobei die Wahrscheinlichkeitskarte unter Anwendung eines Pixelwertes eine Anwesenheitswahrscheinlichkeit einer Person zeigt, die in der Lage ist, einen Leistungsschalter eines elektrischen Geräts zu drücken, auf der Grundlage eines Nutzungsstatus des elektrischen Geräts in einem tatsächlichen Wohnbereich; wobei in der Wahrscheinlichkeitskarte eine Berechnung unter Anwendung eines Pixelwertes von Null für einen Bereich ausgeführt wird, der von einer menschlichen Hand nicht erreicht werden kann, wenn es ein Hindernis gibt; wobei in der Wahrscheinlichkeitskarte die Pixelwerte auf der Grundlage eines Grundrissplans, des Hindernisses, der Position/des Abstandes eines Leistungsschalters und einer Position des elektrischen Geräts ausgedrückt sind; **dadurch gekennzeichnet, dass** wenn mehrere Personen vorhanden sind, die Vorrichtung zur Abschätzung menschlichen Verhaltens (1) eine Berechnung unter Anwendung einer gemischten Normalverteilung für die Anzahl an Personen ausführt.

2. System für bedarfsgerechte Leistungssteuerung nach Anspruch 1, wobei die Vorrichtung zur Abschätzung des Verhaltens einer Person das Verhalten einer Person auf der Grundlage einer personeninduzierten Wahrscheinlichkeit, die eine Wahrscheinlichkeit ist, dass eine Person eine personeninduzierte Maßnahme an einem Gerät vornimmt, und auf der Grundlage der Personenpositionswahrscheinlichkeit abschätzt, die eine Wahrscheinlichkeit ist, dass eine Person sich an einer Position befindet.

3. System für bedarfsgerechte Leistungssteuerung nach Anspruch 2, wobei die Vorrichtung zur Abschätzung des Verhaltens einer Person Eigenschaftsdaten eines Betriebszustands auf der Grundlage lediglich des Leistungsverbrauchsmusters jedes elektrischen Geräts ermittelt und die Personenposition und die personeninduzierte Wahrscheinlichkeit durch wiederholte Berechnung ermittelt, wobei eine personeninduzierte Wahrscheinlichkeit, die aus den Daten gewonnen wird, als ein Anfangswert genommen wird, um sowohl die Personenposition als auch die personeninduzierte Wahrscheinlichkeit abzuschätzen.

4. System für bedarfsgerechte Leistungssteuerung nach Anspruch 3, wobei die Eigenschaftsdaten eines Betriebszustands aus einer Kennung eines elektrischen Geräts, einem Betriebszustand des Geräts und einer Eigenschaft des Geräts zusammengesetzt sind.

5. System für bedarfsgerechte Leistungssteuerung nach Anspruch 4, wobei das Leistungsverbrauchsmuster eines elektrischen Geräts auf der Grundlage einer Änderung im Betriebsmodus oder eines Zustand eines elektrischen Geräts aufgrund des Betriebs des Geräts durch eine Sequenz von Personenzuständen, die Bewegung und Stillhalten beinhalten, erzeugt wird.

6. System für bedarfsgerechte Leistungssteuerung nach Anspruch 4, wobei die Eigenschaft eines elektrischen Geräts ein Mittelwert und eine Streuung des Leistungsverbrauchs ist.

7. System für bedarfsgerechte Leistungssteuerung nach Anspruch 1, wobei die Einrichtung zur Abschätzung des Anfangswertes der personeninduzierten Wahrscheinlichkeit ausgebildet ist, den Anfangswert der personeninduzierten Wahrscheinlichkeit auf der Grundlage einer Wahrscheinlichkeit eines Zustands eines elektrischen Geräts abzuschätzen, indem eine Wahrscheinlichkeit einer Zustandsverschiebung des elektrischen Geräts, die durch eine personeninduzierte Maßnahme hervorgerufen wird, im Voraus gegeben ist.

8. System zur bedarfsgerechten Leistungssteuerung nach Anspruch 1, wobei die Einrichtung zur Positionsabschätzung einer Person einen Zeit-Reihen-Filter verwendet, um die Wahrscheinlichkeit der Personenposition abzuschätzen.

9. System für bedarfsgerechte Leistungssteuerung nach Anspruch 8, wobei der Zeit-Reihen-Filter ein Partikelfilter, ein Kalman-Filter oder ein Filter mit gleitendem Durchschnitt ist.

10. System für bedarfsgerechte Leistungssteuerung nach Anspruch 1, wobei in der Wahrscheinlichkeitskarte kleine Pixelwerte einem großen Bereich in dem Falle zugewiesen sind, in welchem das elektrische Gerät durch eine Fernsteuerung bedienbar ist.

11. System zur bedarfsgerechten Leistungssteuerung nach Anspruch 1, wobei in der Wahrscheinlichkeitskarte in dem Falle, in welchem das elektrische Gerät aus mehreren Positionen aus betätigt wird, größere Pixelwerte mehreren schmalen Bereichen, die den Betrieb ermöglichen, zugewiesen sind.

12. Programm, das bei Abarbeitung in einem Computer den Computer veranlasst, eine Vorrichtung zur Abschätzung menschlichen Verhaltens (1) in einem System zur bedarfsgerechten Leistungssteuerung (50) zu betreiben, das eine Leistungsquelle mit mindestens einer kommerziellen Leistungsquelle (32), mehrere elektrische Geräte (20), einen intelligenten Abgriff (11), der mit den elektrischen Geräten (20) verbunden ist, die Vorrichtung zur Abschätzung menschlichen Verhaltens (1) einschließlich eines Speichers zur Abschätzung des Verhaltens einer Person in einem Wohnbereich und ein Netzwerk aufweist, mit welchem die Vorrichtung zur Abschätzung menschlichen Verhaltens (1) über den intelligenten Abgriff verbunden ist,

wobei die Vorrichtung zur Abschätzung menschlichen Verhaltens eine Einrichtung zur Abschätzung eines Anfangswertes einer personeninduzierten Wahrscheinlichkeit (120), eine Einrichtung zur Positionsabschätzung einer Person (122) und eine Einrichtung zur Neuabschätzung einer personeninduzierten Wahrscheinlichkeit (124) aufweist, und wobei das Programm, wenn es in einem Computer ausgeführt wird, den Computer veranlasst, folgende Prozesse auszuführen:

mittels der Einrichtung zur Abschätzung eines Anfangswertes einer personeninduzierten Wahrscheinlichkeit (120), Vergleichen einer Eigenschaft, die aus einem Leistungsverbrauchsmuster eines elektrischen Gerätes (20) gewonnen wird, mit einer Eigenschaft von Lerndaten, die im Voraus für jedes elektrische Gerät (20) erhalten werden, um einen Zustand des elektrischen Geräts (20) abzuschätzen, und Berechnen einer Abschätzung eines Anfangswertes einer personeninduzierten Wahrscheinlichkeit des elektrischen Geräts (20) auf der Grundlage des abgeschätzten Zustands des elektrischen Geräts,

mittels der Einrichtung zur Positionsabschätzung einer Person (122), Aufrufen des Anfangswertes der personeninduzierten Wahrscheinlichkeit des elektrischen Geräts (20) und einer Wahrscheinlichkeitskarte des Geräts (20) aus dem Speicher, Ausführen für alle Beispiele eines Prozesses zum Verweisen auf eine Beispielpersonenposition, die aus der Wahrscheinlichkeitskarte ausgewählt ist, und Berechnen einer Gewichtung für das Gerät (20) durch Multiplikation einer Personenposition und der personeninduzierten Wahrscheinlichkeit des Geräts, und Berechnen einer Abschätzung einer Wahrscheinlichkeit einer Personenposition an jedem Zeitpunkt bis zu einem letzten Zeitpunkt,

mittels der Einrichtung zur Neuabschätzung einer personeninduzierten Wahrscheinlichkeit (124), Ausführen einer Neuberechnung der personeninduzierten Wahrscheinlichkeit auf der Grundlage der personeninduzierten Wahrscheinlichkeit und einer Personenpositionswahrscheinlichkeit, Ausführung der Neuberechnung der personeninduzierten Wahrscheinlichkeit, bis ein Wert der erneuten Berechnung konvergiert, und Ausgeben der personeninduzierten Wahrscheinlichkeit und der Wahrscheinlichkeit der Personenposition, wenn der Wert konvergiert;

mittels der Einrichtung zur Positionsabschätzung für eine Person (122), Abschätzen einer Bewegungsposition einer Person auf der Grundlage einer personeninduzierten Wahrscheinlichkeit, gemäß welcher eine zweidimensionale Position der Person an einem Zeitpunkt t durch wiederholte Berechnung für einen vorhergehenden Zeitpunkt t -1 bestimmbar ist;

mittels der Einrichtung zur Positionsabschätzung für eine Person (122), Berechnen der personeninduzierten Wahrscheinlichkeit unter Verwendung einer Wahrscheinlichkeitskarte, die auf einer Abhängigkeit zwischen einer Position eines elektrischen Gerätes und einer Personenposition beruht;

wobei die Wahrscheinlichkeitskarte unter Anwendung eines Pixelwertes eine Anwesenheitswahrscheinlichkeit einer Person zeigt, die in der Lage ist, einen Leistungsschalter eines elektrischen Geräts zu drücken, auf der Grundlage eines Nutzungsstatus des elektrischen Geräts in einem tatsächlichen Wohnbereich;

wobei in der Wahrscheinlichkeitskarte eine Berechnung unter Anwendung eines Pixelwertes von Null für einen Bereich ausgeführt wird, der von einer Hand der Person nicht erreichbar ist, wenn es ein Hindernis gibt;

wobei in der Wahrscheinlichkeitskarte die Pixelwerte auf der Grundlage eines Grundrissplans, des Hindernisses, der Position/des Abstands eines Leistungsschalters und einer Position des elektrischen Geräts ausgedrückt werden;

**dadurch gekennzeichnet, dass**

wenn mehrere Personen vorhanden sind, die Vorrichtung zur Abschätzung menschlichen Verhaltens (1) eine Berechnung unter Anwendung einer gemischten Normalverteilung für die Anzahl an Personen ausführt.

13. Programm, das bei Abarbeitung in einem Computer den Computer veranlasst, als eine Vorrichtung zur Abschätzung menschlichen Verhaltens nach Anspruch 1 zu arbeiten, wobei das Programm den Computer veranlasst, einen Prozess auszuführen, mit:

Abschätzen eines Verhaltens einer Person auf der Grundlage einer personeninduzierten Wahrscheinlichkeit, die eine Wahrscheinlichkeit ist, dass eine Person eine personeninduzierte Maßnahme an einem Gerät vornimmt, und auf der Grundlage einer Positionswahrscheinlichkeit für eine Person, die eine Wahrscheinlichkeit dafür ist, dass eine Person an einer Position anwesend ist.

14. Programm, das bei Abarbeitung in einem Computer den Computer veranlasst, als eine Vorrichtung zur Abschätzung menschlichen Verhaltens nach Anspruch 1 zu arbeiten, wobei das Programm den Computer veranlasst, einen Prozess auszuführen mit:

Ermitteln von Eigenschaftsdaten eines Betriebszustands auf der Grundlage lediglich eines Leistungsverbrauchsmusters jedes elektrischen Geräts, und Ermitteln einer Personenposition und einer personeninduzierten Wahrscheinlichkeit durch wiederholte Berechnung, wobei eine personeninduzierte Wahrscheinlichkeit, die aus den Daten gewonnen wird, als ein Anfangswert genommen wird, um sowohl die Personenposition als auch die personeninduzierte Handlung abzuschätzen.

15. Computerlesbares Aufzeichnungsmedium mit einem darauf aufgezeichneten Programm nach Anspruch 12.

16. Computerlesbares Aufzeichnungsmedium mit einem darauf aufgezeichneten Programm nach Anspruch 13.

17. Computerlesbares Aufzeichnungsmedium mit einem darauf aufgezeichneten Programm nach Anspruch 14.

**Revendications**

1. Système de commande d'alimentation sur demande (50) comprenant une source d'alimentation incluant au moins une source d'alimentation commerciale (32), une pluralité de dispositifs électriques (20), une prise intelligente (11) connectée aux dispositifs électriques (20), un appareil d'estimation du comportement humain (1) incluant une mémoire, pour estimer le comportement d'une personne dans un espace de vie, et un réseau auquel est connecté l'appareil d'estimation du comportement humain (1) via la prise intelligente,
dans lequel l'appareil d'estimation du comportement humain (1) inclut un moyen d'estimation d'une valeur initiale de probabilité induite par un humain (120) pour comparer une caractéristique obtenue à partir d'un schéma de consommation d'énergie d'un dispositif électrique (20) à une caractéristique d'apprentissage de données obtenue à l'avance pour chaque dispositif électrique (20) afin d'estimer un état du dispositif électrique, et pour estimer une valeur initiale d'une probabilité induite par un humain du dispositif électrique (20) sur base de l'état estimé du dispositif électrique (20),
un moyen d'estimation de position d'un humain (122) pour appeler en mémoire la valeur initiale de la probabilité induite par un humain du dispositif électrique (20) et une carte de probabilité du dispositif (20), pour mettre en oeuvre un processus, pour tous les échantillons, de référence à un échantillon de position d'un humain sélectionné à partir de la carte de probabilité et de calcul d'un poids pour le dispositif (20) en multipliant la position d'un humain par la probabilité induite par un humain du dispositif (20), et pour estimer une probabilité de position d'un humain à chaque point temporel jusqu'à un temps final, et
un moyen de réestimation de la probabilité induite par un humain (124) pour mettre en oeuvre un recalcul de la probabilité induite par un humain sur base de la probabilité induite par un humain et d'une probabilité de position d'un humain, pour mettre en oeuvre le recalcul de la probabilité induite par un humain jusqu'à ce qu'une valeur du recalcul converge, et pour sortir la probabilité induite par un humain et la probabilité de position d'un humain quand la valeur a convergé ;
dans lequel le moyen d'estimation de position d'un humain (122) estime une position de mouvement d'une personne sur base d'une probabilité induite par un humain selon laquelle une position bidimensionnelle de la personne au moment t peut être déterminée par un calcul répété durant un temps précédent t-1 ;
dans lequel le moyen d'estimation de position d'un humain (122) calcule la probabilité induite par un humain en utilisant une carte de probabilité basée sur une relation entre une position d'un dispositif électrique et une position d'un humain ;
dans lequel la carte de probabilité montre, en utilisant une valeur de pixel, une probabilité d'existence d'une personne capable de pousser sur un interrupteur d'un dispositif électrique, sur base d'un état d'utilisation du dispositif électrique dans un espace de vie actuel ;
dans lequel, dans la carte de probabilité, un calcul est effectué en utilisant une valeur de pixel de zéro pour une plage qui ne peut pas être atteinte par une main humaine s'il y a un obstacle ;
dans lequel, dans la carte de probabilité, les valeurs de pixel sont exprimées sur base d'un plan de sol, de l'obstacle, de la position/distance d'un interrupteur et d'une position du dispositif électrique ; et

**caractérisé**

**en ce que** dans le cas où il y a une pluralité de personnes, l'appareil d'estimation du comportement humain (1) effectue un calcul en utilisant une distribution normale mélangée pour le nombre de personnes.

2. Système de commande d'alimentation sur demande selon la revendication 1, dans lequel l'appareil d'estimation du comportement humain estime le comportement d'une personne sur base de la probabilité induite par un humain, qui est la probabilité qu'une personne effectue une opération induite par un humain sur un dispositif, et de la probabilité de position d'un humain, qui est la probabilité qu'une personne existe à une position.

3. Système de commande d'alimentation sur demande selon la revendication 2, dans lequel l'appareil d'estimation du comportement humain détermine des données de caractéristique d'un état d'opération sur base uniquement du schéma de consommation d'énergie de chaque dispositif électrique, et détermine la position d'un humain et la probabilité induite par un humain par calcul répété en prenant une probabilité induite par un humain obtenue à partir des données comme valeur initiale, pour estimer aussi bien la position d'un humain que la probabilité induite par un humain.

4. Système de commande d'alimentation sur demande selon la revendication 3, dans lequel les données de caractéristique d'un état d'opération sont composées d'un identifiant de dispositif électrique, d'un état d'opération du dispositif et d'une caractéristique du dispositif.

5. Système de commande d'alimentation sur demande selon la revendication 4, dans lequel le schéma de consommation d'énergie d'un dispositif électrique est généré sur base d'un changement de mode d'opération ou d'état d'un dispositif électrique du fait de l'opération du dispositif par une séquence d'états humains incluant le mouvement et l'arrêt.

6. Système de commande d'alimentation sur demande selon la revendication 4, dans lequel la caractéristique d'un dispositif électrique est une moyenne et une dispersion de la consommation d'énergie.

7. Système de commande d'alimentation sur demande selon la revendication 1, dans lequel le moyen d'estimation d'une valeur initiale de probabilité induite par un humain est capable d'estimer la valeur initiale de la probabilité induite par un humain sur base de la probabilité d'un état d'un dispositif électrique, en recevant à l'avance une probabilité d'un état de déplacement du dispositif électrique causé par une opération induite par un humain.

8. Système de commande d'alimentation sur demande selon la revendication 1, dans lequel le moyen d'estimation de position d'un humain utilise un filtre de série temporelle pour estimer la probabilité de position d'un humain.

9. Système de commande d'alimentation sur demande selon la revendication 8, dans lequel le filtre de série temporelle est un filtre particulaire, un filtre de Kalman ou un filtre à moyenne mobile.

10. Système de commande d'alimentation sur demande selon la revendication 1, dans lequel, dans la carte de probabilité, de faibles valeurs de pixel sont attribuées à une large plage dans le cas où le dispositif électrique peut être opéré par une télécommande.

11. Système de commande d'alimentation sur demande selon la revendication 1, dans lequel, dans la carte de probabilité, dans le cas où le dispositif électrique peut être opéré depuis une pluralité de positions, de grandes valeurs de pixel sont attribuées à une pluralité de plages étroites permettant l'opération.

12. Programme qui, lorsqu'il est exécuté par un ordinateur, commande à l'ordinateur d'opérer comme un appareil d'estimation du comportement humain (1) dans un système de commande d'alimentation sur demande (50) comportant une source d'alimentation incluant au moins une source d'alimentation commerciale (32), une pluralité de dispositifs électriques (20), une prise intelligente (11) connectée aux dispositifs électriques (20), l'appareil d'estimation du comportement humain (1) incluant une mémoire pour estimer le comportement d'une personne dans un espace de vie et un réseau auquel est connecté l'appareil d'estimation du comportement humain (1) via la prise intelligente,

dans lequel l'appareil d'estimation du comportement humain inclut un moyen d'estimation d'une valeur initiale de probabilité induite par un humain (120), un moyen d'estimation de position d'un humain (122) et un moyen de réestimation d'une probabilité induite par un humain (124), et

dans lequel le programme, lorsqu'il est exécuté par un ordinateur, commande à l'ordinateur d'exécuter les processus suivants :

par le moyen d'estimation d'une valeur initiale de probabilité induite par un humain (120), comparaison d'une caractéristique obtenue à partir d'un schéma de consommation d'énergie d'un dispositif électrique (20) à une caractéristique d'apprentissage de données obtenue à l'avance pour chaque dispositif électrique (20) afin d'estimer un état du dispositif électrique (20), et calcul d'une estimation d'une valeur initiale d'une probabilité induite par un humain du dispositif électrique (20) sur base de l'état estimé du dispositif électrique,

par le moyen d'estimation de position d'un humain (122), appel de la valeur initiale de la probabilité induite par un humain du dispositif électrique (20) et d'une carte de probabilité du dispositif (20) à partir de la mémoire, mise en oeuvre, pour tous les échantillons, d'un processus de référence à un échantillon de position d'un humain sélectionné à partir de la carte de probabilité et calcul d'un poids pour le dispositif (20) en multipliant une position d'un humain par la probabilité induite par un humain du dispositif, et calcul de l'estimation d'une probabilité de position d'un humain à chaque point temporel jusqu'à un temps final,

par le moyen de réestimation de la probabilité induite par un humain (124), mise en oeuvre d'un recalcul de la probabilité induite par un humain sur base de la probabilité induite par un humain et d'une probabilité de position d'un humain, mise en oeuvre du recalcul de la probabilité induite par un humain jusqu'à ce qu'une valeur du recalcul converge, et sortie de la probabilité induite par un humain et de la probabilité de position d'un humain quand la valeur a convergé;

par le moyen d'estimation de position d'un humain (122), estimation d'une position de mouvement d'une personne sur base d'une probabilité induite par un humain selon laquelle une position bidimensionnelle de la personne au temps t peut être déterminée par calcul répété pour un temps précédent t-1 ;

par le moyen d'estimation de position d'un humain (122), calcul de la probabilité induite par un humain en utilisant une carte de probabilité basée sur une relation entre une position d'un dispositif électrique et une position d'un humain ;

dans lequel la carte de probabilité montre, en utilisant une valeur de pixel, une probabilité d'existence d'une personne capable de pousser sur un interrupteur d'un dispositif électrique, sur base d'un état d'utilisation du dispositif électrique dans un espace de vie actuel ;

dans lequel, dans la carte de probabilité, un calcul est effectué en utilisant une valeur de pixel de zéro pour une plage qui ne peut pas être atteinte par une main humaine s'il y a un obstacle ;

dans lequel, dans la carte de probabilité, les valeurs de pixel sont exprimées sur base d'un plan de sol, de l'obstacle, de la position/distance d'un interrupteur et d'une position du dispositif électrique ; et

**caractérisé**

**en ce que** dans le cas où il y a une pluralité de personnes, l'appareil d'estimation du comportement humain (1) effectue un calcul en utilisant une distribution normale mélangée pour le nombre de personnes.

13. Programme qui, lorsqu'il est exécuté par un ordinateur, commande à l'ordinateur d'opérer comme un appareil d'estimation du comportement humain selon la revendication 1, le programme commandant à l'ordinateur de mettre en oeuvre le processus suivant :

estimation du comportement d'une personne sur base d'une probabilité induite par un humain, qui est une probabilité qu'une personne mette en oeuvre une opération induite par un humain sur un dispositif, et d'une probabilité de position d'un humain, qui est une probabilité qu'une personne existe à une position.

14. Programme qui, lorsqu'il est exécuté par un ordinateur, commande à l'ordinateur d'opérer comme un appareil d'estimation du comportement humain selon la revendication 1, le programme commandant à l'ordinateur de mettre en oeuvre le processus suivant :

détermination de données de caractéristique d'un état d'opération sur base uniquement d'un schéma de consommation d'énergie de chaque dispositif électrique, et détermination de la position d'un humain et d'une probabilité induite par un humain par calcul répété en prenant une probabilité induite par un humain obtenue à partir des données comme valeur initiale, pour estimer aussi bien la position d'un humain qu'une opération induite par un humain.

15. Support d'enregistrement lisible par un ordinateur sur lequel est enregistré un programme selon la revendication 12.

16. Support d'enregistrement lisible par un ordinateur sur lequel est enregistré un programme selon la revendication 13.

17. Support d'enregistrement lisible par un ordinateur sur lequel est enregistré un programme selon la revendication 14.

EP 2 733 647 B1

[Figure 4]

[Figure 5]

HUMAN STATE

S1 S2 S3 S4

ELECTRICAL DEVICE 1

ELECTRICAL DEVICE 2

ELECTRICAL DEVICE 3

[Figure 6]

S1 S2 S3

S1 S2 S3

[Figure 7]

EP 2 733 647 B1

[Figure 9]

[Figure 10]

[Figure 11]

[Figure 12]

[Figure 13]

[Figure 14]

START

PROCESS OF INITIAL VALUE ESTIMATION OF HUMAN-INDUCED PROBABILITY

S1

PROCESS OF HUMAN POSITION ESTIMATION

S3 (ONE PERSON)

S7 (A PLURALITY OF PERSONS)

PROCESS OF RE-ESTIMATION OF HUMAN-INDUCED PROBABILITY

S11

$$P_h^{(i)}(z) \quad \mathbf{P}_{rh}^{(i)}$$

[Figure 15]

S1 **PROCESS OF INITIAL VALUE ESTIMATION OF HUMAN-INDUCED PROBABILITY**

COMPARE AVERAGE VALUE AND DISPERSION VALUE OF POWER CONSUMPTION OBTAINED BY MEASURING POWER CONSUMPTION PATTERN OF DEVICE WITH LEARNING DATA OF AVERAGE VALUE AND DISPERSION VALUE OF POWER CONSUMPTION OBTAINED IN ADVANCE FOR EACH STATE OF EACH DEVICE, AND ESTIMATE STATE OF DEVICE     S11

INPUT ESTIMATED STATE OF DEVICE TO EQUATION (7), AND ESTIMATE INITIAL VALUE OF HUMAN-INDUCED PROBABILITY     S13

END

[Figure 16]

S3  PROCESS OF HUMAN
POSITION ESTIMATION
(ONE PERSON)

GENERATE N SAMPLES FOR RANDOM HUMAN POSITIONS AS INITIAL
VALUE, AND TAKE THESE AS INITIAL SET OF POSTERIOR SAMPLES.
MAKE TIME INITIAL TIME (t:=1)   S31

MOVE EACH OF POSTERIOR SAMPLES AT TIME (t-1) ACCORDING TO
MOVEMENT MODEL OF PERSON, AND GENERATE SET OF PREDICTED
SAMPLES AT TIME t   S33

(1) SELECT ONE SAMPLE j FROM SET OF PREDICTED SAMPLES   S35

(2a) SELECT ONE DEVICE   S37

(2b) CALL UP, FROM MEMORY, LIKELIHOOD MAP OF DEVICE AND
HUMAN-INDUCED PROBABILITY OF DEVICE AT TIME t   S39

(2c) CALCULATE WEIGHT OF DEVICE BY REFERRING TO SAMPLE HUMAN
POSITION SELECTED FROM LIKELIHOOD MAP OF DEVICE AND MULTIPLYING
HUMAN POSITION AND HUMAN-INDUCED PROBABILITY OF DEVICE   S41

(1)

[Figure 17]

(1)

| | |
|---|---|
| (3) CALCULATE WEIGHT $\pi_t^{[j]}$ OF SAMPLE j BY ADDING UP ALL WEIGHTS CALCULATED BY PERFORMING PROCESSES OF (2a), (2b) AND (2c) ON ALL DEVICES WHILE CHANGING SELECTED DEVICE | S43 |
| PERFORM PROCESSES OF (1) TO (3) ON ALL SAMPLES WHILE CHANGING SELECTED SAMPLE | S45 |
| DUPLICATE SAMPLES BY A NUMBER OF PIECES PROPORTIONAL TO N × WEIGHT $\pi_t^{[j]}$ OF SAMPLE FOR EACH SAMPLE IN SET OF PREDICTED SAMPLES, AND GENERATE SET OF POSTERIOR SAMPLES AT TIME t | S47 |
| DETERMINE WHETHER TIME t IS LAST TIME | S49 |

S51

t IS LAST TIME? — No

Yes

END

t+1 IS GIVEN AS TIME — S53

TO S33

[Figure 18]

S11 ( PROCESS OF RE-ESTIMATION OF HUMAN-
INDUCED PROBABILITY )

DETERMINE POSITION j ON PATH OF PERSON SATISFYING
EQUATION (14), AND UPDATE HUMAN-INDUCED PROBABILITY BY
EQUATION (15)                                          S111

UPDATE EVENT SEQUENCE BY REMOVING COMBINATION FOR WHICH
HUMAN-INDUCED PROBABILITY IS AT OR BELOW THRESHOLD $T_0$
FROM EVENT SEQUENCE $E^{(i)}$, BASED ON EQUATION (16)     S113

DETERMINE WHETER CONVERGENCE AT VALUE SAME AS PRECEDING
RESULTING VALUE FOR HUMAN-INDUCED PROBABILITY IS ACHIEVED   S115

S117

CONVERGED?                    No → TO S31

Yes

( END )

[Figure 19]

S7  PROCESS OF HUMAN POSITION
ESTIMATION (A PLURALITY OF
PERSONS)

GENERATE N SAMPLES FOR RANDOM HUMAN POSITIONS AS INITIAL
VALUE, AND TAKE THESE AS INITIAL SET OF POSTERIOR SAMPLES.
MAKE TIME INITIAL TIME (t:=1)    S71

MOVE EACH OF POSTERIOR SAMPLES AT TIME (t-1) ACCORDING TO
MOVEMENT MODEL OF PERSON, AND GENERATE SET OF PREDICTED
SAMPLES AT TIME t    S73

(1) SELECT ONE SAMPLE j FROM SET OF PREDICTED SAMPLES    S75

(2a) SELECT ONE DEVICE    S77

(2b) CALL UP, FROM MEMORY, LIKELIHOOD MAP OF DEVICE AND HUMAN-
INDUCED PROBABILITY OF DEVICE AT TIME t    S79

(2c) CALCULATE WEIGHT OF DEVICE BY REFERRING TO SAMPLE HUMAN
POSITION SELECTED FROM LIKELIHOOD MAP OF DEVICE AND MULTIPLYING
HUMAN POSITION AND HUMAN-INDUCED PROBABILITY OF DEVICE    S81

(3)

[Figure 20]

(3)

(3) CALCULATE WEIGHT $\pi_t^{[j]}$ OF SAMPLE j BY ADDING UP ALL WEIGHTS CALCULATED BY PERFORMING PROCESSES OF (2a), (2b) AND (2c) ON ALL DEVICES WHILE CHANGING SELECTED DEVICE    S83

PERFORM PROCESSES OF (1) TO (3) ON ALL SAMPLES WHILE CHANGING SELECTED SAMPLE    S85

DUPLICATE SAMPLES BY A NUMBER OF PIECES PROPORTIONAL TO N × WEIGHT $\pi_t^{[j]}$ OF SAMPLE FOR EACH SAMPLE IN SET OF PREDICTED SAMPLES, AND GENERATE SET OF POSTERIOR SAMPLES AT TIME t    S87

(4)

[Figure 21]

```
                                    (4)
                                     │
                                     ▼
        ┌────────────────────────────────────────────────┐
        │ INITIAL ASSOCIATION PROBABILITY AND ASSOCIATION │   S95
        │ PROBABILITY IN PREVIOUS FRAME OF EACH SAMPLE     │
        └────────────────────────────────────────────────┘
                                     │
                                     ▼
        ┌────────────────────────────────────────────────┐
        │      ESTIMATE MIXED NORMAL DISTRIBUTION FOR M    │   S97
        │                    PERSONS                       │
        └────────────────────────────────────────────────┘
                                     │
                                     ▼
        ┌────────────────────────────────────────────────┐
        │  DETERMINE WHETHER ESTIMATED VALUE IS CONVERGED  │   S99
        └────────────────────────────────────────────────┘
                                     │
                                     ▼          S101
                          ◇─────────────────────◇        No
                          ◇      CONVERGED?      ◇──────────────┐        S103
                          ◇─────────────────────◇              │
                                     │                ┌───────────────────────────┐
                                   Yes                │ UPDATE ASSOCIATION         │
                              ┌──────────┐            │ PROBABILITY OF EACH SAMPLE │
                              │   END    │            └───────────────────────────┘
                              └──────────┘
```

[Figure 22]

[Figure 23]

[Figure 24]

[Figure 25]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008152798 A

**Non-patent literature cited in the description**

- **PROFESSOR TAKASHI MATSUYAMA.** The EoD control system. Kyoto University
- **PROFESSOR TAKASHI MATSUYAMA.** i-Energy and Smart Grid. Graduate School, Kyoto University, 29 July 2009, 21
- **TAKEKAZU KATO ; CHO HYUN-SANG ; LEE DONGWOOK ; TETSUO TOYOMURA ; TATSUYA YAMAZAKI.** *The Institute of Electronics, Information and Communication Engineers, Technical report, USN, Ubiquitous Sensor Network,* 2009, vol. 108 (399), 133-138
- **YUSUKE YAMADA et al.** Human Behavior Estimation from Power Consumption Patterns of appliances over Smart Tap Network. *IEICE Technical Report, Denshi Jouhou Tsuushin Gakkai,* ISSN 0913-5685, 25-30
- Great East Japan Earthquake. March 2011